(19) Europäisches Patentamt
European Patent Office
Office européen des brevets

(11)  **EP 4 229 489 B1**

(12)  **EUROPEAN PATENT SPECIFICATION**

(45) Date of publication and mention
of the grant of the patent:
**10.07.2024  Bulletin 2024/28**

(21) Application number: **21824339.2**

(22) Date of filing: **01.12.2021**

(51) International Patent Classification (IPC):
*G06F 30/331* *(2020.01)*     *G06F 30/20* *(2020.01)*
*G05B 19/418* *(2006.01)*

(52) Cooperative Patent Classification (CPC):
**G05B 19/41885; G06F 30/20; G06F 30/331;**
**Y02P 90/02**

(86) International application number:
**PCT/EP2021/083793**

(87) International publication number:
**WO 2022/128478 (23.06.2022 Gazette 2022/25)**

(54)  **CO-SIMULATION, COMPUTER SYSTEM**

VERFAHREN UND COMPUTERSYSTEM ZUR NUMERISCHEN MODULAREN CO-SIMULATION.

MÉTHODE ET SYSTÈME INFORMATIQUE POUR LA CO-SIMULATION NUMÉRIQUE MODULAIRE.

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **18.12.2020  EP 20215746**
**22.01.2021  EP 21152855**

(43) Date of publication of application:
**23.08.2023  Bulletin 2023/34**

(73) Proprietor: **Siemens Industry Software NV**
**3001 Leuven (BE)**

(72) Inventors:
• **EGUILLON, Yohan**
**63400 Chamalières (FR)**
• **LACABANNE, Bruno**
**42820 Ambierle (FR)**

(74) Representative: **Siemens Patent Attorneys**
**Postfach 22 16 34**
**80506 München (DE)**

(56) References cited:
**DE-A1- 102019 206 541     US-B1- 6 230 114**

• **ÇAKMAK HÜSEYIN ET AL: "A new distributed**
**co-simulation architecture for multi-physics**
**based energy systems integration",**
**AUTOMATISIERUNGSTECHNIK - AT., vol. 67, no.**
**11, 26 November 2019 (2019-11-26), DE, pages**
**972 - 983, XP055807920, ISSN: 0178-2312, DOI:**
**10.1515/auto-2019-0081**

**Description**

FIELD OF THE INVENTION

The invention relates to computer implemented simulations.

More specifically, the invention relates to at least two computer implemented simulations simulating tasks in parallel contributing to a common result.

BACKGROUND OF THE INVENTION

Industrial application of mechatronic simulation is reaching a point today where modular simulation is, beyond a simple practical aspect, necessary. Modular denotes the capability to couple/decouple subunits together, simulate and validate separately then connect them together to get a full digital representation of the whole architecture. Indeed, less by performance concerns than by design, co-simulation is a topical problem since the models on which time simulations are operated have modular structures of subunits connected to each other (blocks representing a specific physics field with their own internal dynamics, control boxes, ...). co-simulation is the way of operating a simulation of such models by simulating each entity separately and by managing their respective knowledge of the information of other subunits which may generally be termed communications. It is mainly motivated by the impossibility of grouping these subunits into a large model because of the incompatible platforms, e.g. different software on which each subunit has been developed, or different internal solvers used for each subunit. We thus obtain a result in general for the co-simulation:

- co-simulation may be less accurate than by a single simulation of the assembled system because the communications are done at discrete times and not in a continuous way. The sampling of signals exchanged may cause numerical artefacts and instabilities in the whole simulation.
- co-simulation may require more time to process. Although subunits may be smaller in terms of number of variables and parallel machine architecture may be used, communications often generate discontinuities which cause untimely restarting of the internal solvers in each of these subunits.

Known approaches to deal with issues arising from:

- numerical artefacts introduced by sampling of signals at interfaces,
- signal reconstruction between communications,

point to:

- Usage of Gauss-Seidel rather than Jacobi exchanges,
- Energy conservation at interfaces through signals correction,
- Prediction of inputs using outputs history,
- Use of Jacobian information,
- Iterative co-simulation with rollback.

In general efficiency issues arising with co-simulation may be lowered using higher time steps for data exchanges. Less frequent information exchanges may worsen the accuracy of the global solution. A simple approach to attempt improving this dilemma may use prediction between data exchanges.

One known tool (COSIMATE offered by KiasTek, with DPA (Data Prediction Algorithm)) uses prediction to reduce communication frequency. Basically, values are predicted based on past.

Another approach (Martin Benedikt: Model.connect from AVL, with NEPCE algorithm: Nearly Energy Preserving Coupling Element in ) provides a correction of communicated variables based on conservation of energy between each subunit.

From Çakmak, Hüseyin ET AL "A new distributed co-simulation architecture for multi-physics based energy systems integration", [AUTOMATISIERUNGSTECHNIK - AT.,vol. 67, no. 11, 26. November 2019 (2019-11-26), pages 972-983, XP055807920,DE, ISSN: 0178-2312, DOI:10.1515/auto-2019-0081] a co-simulation approach is known to simulate energy systems integration scenarios including co-simulation of electrolysis coupled with photovoltaics, a hydrogen storage with a combined heat and power plant and a variable power consumption.

Simulation setups using iterative co-simulation methods are difficult to realize, since subunits generated by different authoring tools do not provide the ability to perform an integration over a time interval which has already been simulated (so-called "rollback" capability).

It is one objective of the invention to improve the co-simulation accuracy.

It is another objective of the invention to make co-simulation more efficient.

It is another objective of the invention to make co-simulation more flexible to be applied to a wide range of systems regardless of their capabilities.

SUMMARY OF THE INVENTION

The object of the invention is achieved by the independent claims. The dependent claims describe advantageous developments and modifications of the invention.

In accordance with the invention there is provided a solution for the above described problems by the incipiently defined method with the additional steps:

(a) disaggregating said system into at least two subunit simulation subsystems,

(b) simulating the respective subunits by stepwise repeatedly generating subsystem-step-output from subsystem-step-input during a respective subsystem-time-step (which may be considered as 'operating/simulating said subsystem'),

characterized by the additional steps:

(c) receiving connection interface variables from a sending subsystem comprising at least numerical data, prediction subsystem - wherein said numerical data belongs to said subsystem-step-output of said sending subsystem, comprising details about at least one information of the sending subsystem to be sent to at least one receiving subsystem, wherein said sending subsystem and said receiving subsystem respectively belong to said subsystems,

(d) delaying the forwarding of said received connection interface variables for a delay-time during which the systems simulate a time-step (b),

(e) predicting said numerical data by generating a data-prediction-model over said delay-time from the past numerical data produced by said system to obtain predicted numerical data of said numerical data provided by said sending subsystem,

(f) starting the next simulation step of said receiving subsystem generating the next subsystem-step-output from subsystem-step-input, wherein said subsystem-step-input comprises said predicted numerical data.

The invention enables a robust, accurate, efficient simulation.

According to another preferred embodiment said data-prediction-model is selected as a polynomial function of degree 0, 1, or 2.

According to another preferred embodiment the method may comprise the additional step of extending said polynomial order of an obtained data-prediction-models (DEM) through an Hermite interpolation (e.g. MATHEMATICS OF COMPUTATION, Volume 71, Number 239, Pages 1043-1074, S 0025-5718(02)01446-1, Article electronically published on January 17, 200). Regardless of the polynomial degree (0, 1 or 2) of a given data-prediction of a subsystem-step-input, it might be extended - preferably up to order 3 - through an Hermite interpolation.

The constraints for this Hermite interpolation extension may be:

- last value (numerical data (DTA)) reached by the predictor at current time,
- value (numerical data (DTA)) predicted by the predictor at the end of the current time-step,
- last time-derivative (of numerical data (DTA)) reached by the predictor at current time, and
- time-derivative (of numerical data (DTA)) predicted by the predictor at the end of the current time-step. Thus, the smoothness of the subsystem-step-input won't be broken at the current communication time. If this may be done at every time-step, all inputs may guarantee C1 smoothness (continuity and continuity of their derivatives).

A subsystem may be understood as a simulation unit respectively subunit.

Another preferred embodiment provides one of the described methods, respectively advanced methods comprising the additional steps of:

- determining said data-prediction-model by selecting a data-prediction-model-type from a group of predetermined functions and
- calibrating said data-prediction-model to respective said sending subsystem's numerical data of subsystem-step-output of the current and previous 1, 2, 3 or more steps - this may preferably result in generating polynomial data-prediction-models of different orders,
- determining the absolute error for each of said data-prediction-model by comparing said numerical data calculated by said data-prediction-model on basis of at least the step before the latest subsystem-step-output to the latest numerical data of subsystem-step-output for the same point in time for said sending subsystem,

- selecting from the selected data-prediction-model-type the data-prediction-model with the order corresponding to the smallest absolute error.
- in case all data-prediction-models of the data-prediction-model-type generate an error greater than a given threshold, constant prediction (order 0) is used for the sake of safety.
  Most preferably all of said data-prediction-models are polynomials of different orders.

Preferably said data-prediction-model-type may be chosen at the beginning of the co-simulation - even more preferred the data-prediction-model-type is selected only at the beginning of the co-simulation and remains unchanged (no dynamic change) during the co-simulation, wherein co-simulation refers to a co-simulation step. Most preferably a change of the data prediction model type may be done or only be possible before starting the co-simulation.

Preferably a dynamic change during the co-simulation may be done regarding a polynomial order for at least one, preferably for all data-prediction-models.

In the context of simulation time-references will refer to a virtual simulation time if from the context the reference isn't clearly different from virtual simulation time.

After determining said data-prediction-model (maybe by selecting from the (pre-)selected data-prediction-model-types the data-prediction-model-type with the least absolute error) and optionally computation of the order (polynomial degree) of said data-prediction-model, the computation of the coefficients of the associated polynomial function may be done. These coefficients may then be communicated to the connected input(s) so that the latter(s) can have their time-dependent formulas or calculated numerical data injected during the co-simulation steps of the system(s) it (they) come(s) from. As said simulation may be asynchronous, the data-prediction-model e.g. polynomial function may not necessarily be evaluated directly but may be send to the receiving subsystem which may use the respectively sent data-prediction-model to determine said numerical data itself. This option may be implemented alternatively and maybe best suitable for every receiving/sending subsystem combination.

The computation itself of such coefficients may be done in two different ways: by extrapolation or by constrained leastsquares method, i.e. least squares fitting by forcing the data to reach a certain value at a certain time.

One preferred embodiment provides the "extrapolation" mode, which may use the latest numerical data supplied from a sending subsystem for determining an order of said data prediction model and for calibrating. This method may reduce any influence or effect coming from too far in the past, but also may create a small difference between the set of values that have been used to determine the order (as previously mentioned) and the ones used to calibrate the polynomial function intended to be used for or as time-dependent input to the receiving subsystem.

As an alternative preferred embodiment, the "constrained least squares" mode may fit a data prediction model, e.g. a polynomial function of degree n on the n+2 latest numerical data supplied from a sending subsystem when the determined order is n (calibrating). This ensures that all points that are considered for determining the order are also taken into account for the polynomial function calibration. Also, this makes current and close future values depend on old values (older than in extrapolation mode).

Another preferred embodiment provides, in particular for systems for which the time-dependent numerical data may not be generated by a data prediction model polynomial function of a high enough degree, a step (in other words: stage) of transforming the polynomial function into a polynomial function of lower degree. This may keep a behavior close to the one initially defined and may also keep the value supposed to be reached at the end of the co-simulation step of the system. Preferably this step (in other words: stage)may be performed after - preferably each - predictor calibration - as a post-processing step (it is a post-processing of the calibration but a pre-processing of the computation respectively of the co-simulation step). This may transform the predictor asked by the method up to this step into a predictor which is more feasible by the system.

Another preferred embodiment of the previously defined embodiment provides a polynomial order reduction for systems supporting only order 1 or lower: when a polynomial function of order 2 would be injected as time-dependent input, a reduced order may be used as an alternative based on values at the beginning and at the end of the respective macro-step, in case of order 0 this would only be the value at the end of the step.

Another preferred embodiment of the previously defined embodiment provides a step of order reduction for systems. It may be applied to transform such predictor models:
The value supposed to be reached at the end of the co-simulation step of the system holding the input will be kept as it is at the time at which the error will be computed and injected in the time-stepper.

This stage of transforming may preferably be applied to systems supporting not higher than order 1.

When a polynomial function of order 2 according to the method may be injected as time-dependent input, but the system supports not higher than order 1 a affine function based on values at the beginning and at the end of the macro-step may be used.

When a polynomial function of order 1 or 2 according to the method may be injected as time-dependent input, but the system supports not higher than order 0 a constant function based on value at the end of the macro-step may be used..

In conventional co-simulation, dynamics of the coupling variables may be lost (e.g. when step-inputs are hold with a zero-order predictor-model (constant)). In order to avoid this, inputs may be computed as time-dependent variables, preferably as polynomial functions, preferably of order 0, 1, 2 or higher. Determining the order for the upcoming step is done by comparing the absolute errors we would have obtained by trying to predict the latest obtained value with predictions of order 0, 1, and 2. This a-posteriori criterion will determine the order that will be imposed to the time-dependent input connected to the output on which's basis the previous computation was done. This process may be done separately for each output variable of each subsystem. This means that different outputs of the same subsystem may have different polynomial orders, and this may also be true for the inputs as they come from their connected outputs.

Exchanges in co-simulation between the subsystems may often be performed at fixed time intervals. The user generally may choose a time interval (may be called macro-time-step) that will pace exchanges between different parts of the full simulation respectively the overall system simulation. This approach is commonly adopted in industry. Defining the optimal macro-time-step at which exchange could occur may be difficult.

According to a preferred embodiment of the invention said method may comprise the additional steps of:

- determining the error (preferably: compute a relative error out of an absolute error) by comparing said numerical data calculated by said data-prediction-model on basis of at least the step before the latest subsystem-step-output to the latest numerical data of subsystem-step-output for the same point in time for said sending subsystem,
- adjusting the subsystem-time-step of said sending subsystem according to a predetermined relation between relative error and subsystem-time-step variation (expansion: increase, or contraction: decrease).

This advantageous enhancement enables a better and dynamic approximation to an optimal time step. The subsystem-time-step of said sending subsystem to be adjusted may be understood to be the lastly used time-step of the subsystem, or "old time step". This lastly used time-step of the subsystem may vary dynamically and it may not be intrinsic to the model, and it may be different for every subsystem (asynchronousness) .

According to a preferred embodiment of the invention said predetermined relation between error (preferably: compute a relative error out of an absolute error) and subsystem-time-step variation is a continuous function. More preferably said predetermined relation between error and subsystem-time-step is a decreasing function.

According to a preferred embodiment of the invention said predetermined relation between error (ERD) and subsystem-time-step (SMP) is defined as:

$$\mathtt{adjusted\ (SMP) = previous\ (SMP) * BETA * (RTTO/\ ERD)\char94(n+1)}$$

wherein:

n: polynomial order of data-prediction-model (DEM)
RTTO: relative tolerance
ERD: error (preferably the relative error is used, may be termed NERR: normalized absolute error (ERD))
BETA: safety coefficient in [0.5, 1.0[, preferably 0.9

According to a preferred embodiment of the invention said delay-time is suitable to delay transmitting said numerical data until a predetermined point in time when said receiving subsystem is ready to receive said numerical data.

This 'adjusting the subsystem-time-step' stage may be called time-stepping and the module of the system performing said time stepping of said method may be termed 'time-stepper'. The time-stepper may determine a dilatation coefficient on subsystems providing a subsystem-step-output (short: 'output'). This dilatation coefficient may be multiplied by the latest co-simulation step size to obtain the upcoming co-simulation step size. A coefficient greater than 1.0 will thus produce an expansion of the step size, and a coefficient smaller than one will produce a contraction of the step size. Subsystems without output will have the upcoming co-simulation step size set to the gap between the reached time and the final time. A scheduler may then correct the step size according to the gap so that asynchronization is controlled. At the end of a co-simulation step of a system with at least one output, the values of the outputs may be retrieved. As the data-prediction-model e.g. a polynomial function is known said data-prediction-model may be evaluated for the time of the end of the latest co-simulation step (so-called 'predictors') and may be compared to the values obtained by the simulation of the upcoming step (so-called 'correctors'). If said data-prediction-model e.g. a polynomial function has a degree of n, then the error has an order of n+1, which means that, on a fixed co-simulation step size, the logarithm of the error is supposed to decrease n+1 time faster than the size of the co-simulation steps. By normalizing this error (in order to eliminate the influence of the order of magnitude) and providing this normalized error (i.e. relative error) to a 'predetermined relation between error and subsystem-time-step size variation', which may be termed dilatation-'heuristic formula', the dilatation coefficient may be obtained. The dilatation heuristic formula has a parameter: the 'relative tolerance'. It acts as a threshold: when the relative error is smaller than said relative tolerance, the dilatation coefficient will be greater than one, and vice-versa. The consequence is that a system is likely to take bigger and bigger steps when the errors on its outputs are small and is likely to take smaller and smaller steps otherwise. The $\beta$ coefficient acts a safety or stability factor. It may arbitrarily be fixed to 0.9 to ensure that the step sizes will not increase too fast.

The normalization of the error may either be done:

- Regarding the order of magnitude,
- Regarding the amplitude be observed on the concerned output from the beginning of the co-simulation, or
- Regarding that amplitude be observed on the concerned output from the beginning of the co-simulation and that we damp with a ratio (e.g. 5% every second) so that big jumps do not have eternal influence.
- Regarding the same process than above and adding a restart (past peaks are forgotten) when an event is detected. Such events might be critical points (derivative annulation), detected by a slope sign change on the said output.
- Regarding the progressively computed standard deviation of the concerned output, around a progressively computed average.
- Regarding the progressively computed mean deviation of the concerned output, around a progressively computed average.
- Regarding the safest of all previously described processes, that is to say the one leading to the smallest dilatation coefficient.

This choice of normalization method is essentially equivalent and may be applied to every output variable for the time-stepping. When the dilatation coefficient is too small (it may appear for a 'very' big error) or too huge (it may appear for temporary constant output variables, which generate an error of zero), the step size evolution should be still under control. For this reason - as a preferred embodiment - a minimum and a maximum value for this dilatation coefficient may be chosen. When the coefficient is smaller that this boundary minimal value, the coefficient is set to this minimum value, and respectively when it is greater than the maximum value is assigned.

Another preferred embodiment may provide that: if the previous ('old') step has been reduced by the scheduler, the minimum and maximum bounds for the dilatation ratio may be corrected so that the new step is greater than the original minimum dilatation ratio multiplied by the original previous step (determined by the time-stepper, without the correction of the scheduler), and smaller than the original maximum dilatation ratio multiplied by the original previous step as well.

As a preferred embodiment,

- a system may adapt its step size according to the minimum dilatation ratio among the ones generated by each of its outputs (this is safe, but usually slower), or
- step size is set according to the mean of the dilatation ratios generated by each of its outputs (usually faster as the step sizes are expected to be bigger, but less safe).

According to a preferred embodiment said method may comprise the additional step (or stage) of restricting an upcoming subsystem-time-step such that it corresponds to the first upcoming end-of-step time of any subsystem that has outputs connected with inputs to the subsystem to be time-step-restricted.

A subsystem can restrict its upcoming step size to the one that will make it correspond to the first upcoming end-of-step time of any subsystem that has outputs connected with inputs of this very subsystem: this is the "inputs-based restriction". Doing so on every subsystem (starting by the one which has the nearest upcoming communication time) guarantees that no subsystem uses a data-predictor at a time that is greater than the time at which this predictor was said to be valid regarding the imposed relative tolerance.

Applying this step (stage) preferably to every subsystem (preferably starting by the one which has the smallest upcoming communication time) guarantees that no subsystem uses a data-predictor at a time that is greater than the time at which this predictor was said to be valid regarding the imposed relative tolerance.

Special attention must be paid to the order of parsing the subsystems. Indeed, restricting the subsystems in a wrong order may lead to not optimal results. According to a preferred embodiment the order may be adjusted according to the following process:

- the subsystem with the second nearest next communication time may be provided with a different time step length and therefore changed communication time, wherein this new value will replace the old one for the rest of the procedure.
- This time step length adjusting method step may be repeated for other subsystems in the order of the respectively next nearest communication time.

In other words, the order of the input-based restriction may be the subsystems sorted according to their next communication times, respectively increasingly sorted to communication times. 'Communication time' is equivalent with the time at which the respective previous simulation step ends and the subsystem is ready to exchange data before the next simulation step starts.

According to a further preferred embodiment the same process as above may be applied but by supposing that every subsystem is connected to every other subsystem (even when this is not the case). This assumption synchronizes the exchanging times as long as every subsystem supports variable step. This synchronization may be useful even in systems which don't exclusively consist of variable step capable subsystems hence this process leads to a "more synchronized" co-simulation and to reduce the number of idle subsystems waiting for others.

The first input-based restriction strategy may be called "Causality synchronization". The user may choose to apply a "Forced synchronization", which proceeds the same way but as if every subsystem were connected to every other subsystem. This may help to solve problems of unsafe restriction when two subsystems have a close communication time (which may generate a very small step for one of them). The input-based restriction should occur after the insensitivity-based expansion, otherwise, the latter breaks what input-based restriction guarantees.

Some subsystems may produce outputs that are connected to inputs of other subsystems with imposed step sizes. These fixed step-receiving-subunits will not be able to proceed data before there next upcoming communication time. If all outputs of a given system are connected to such inputs (belonging to fixed-step systems), and if this system is not constrained by a restriction due to its inputs (like the input-based restriction), its step may be extended.

According to a preferred embodiment so called: "outputs-based expansion", the method may comprise the additional steps (stages) of,

- selecting a subsystem which only has subsystem-step-outputs connected with subsystem-step-input of subsystems which do not support variable subsystem-time-step,
- extending the selected subsystem's upcoming subsystem-time-step size until the very next end-of-step of the subsystems that have subsystem-step-inputs connected to its subsystem-step-outputs.

Indeed, those subsystems will not be able to process the restrictions to change the time step size. This time-step increase will thus not change any result but will produce an acceleration which may lead to cost reduction via reduction of elapsed time.

According to a preferred embodiment of the method subsystems that have no output (submodel-step-output), the time-step can be set as the remaining time until the end of the simulation. If such a subsystem without output has submodel-step-input(s), the upcoming time-step will be restricted to a more reasonable one according to the process described in the claims (see inputs-based restriction).

According to a preferred embodiment an additional method step (stage) may be provided after said time-stepper defined the time-step-size and - in other words - thereby defined the next communication times (in other words: 'rendezvous'- times) for each subsystem, a method step (stage) of correcting said time-step-size according to I/O restrictions of each subsystem may be provided.

Accordingly - a scheduling module or a so-called scheduler may correct said time-step-sizes on each system and thereby define active and idle subsystems/systems.

Each time the co-simulation - maybe a coordination module or said communication manager (may also be termed 'orchestrator') - triggers a subsystem to perform a co-simulation step, some of the subsystems may be idle (the orchestrator does not trigger the system to do anything): these will be "idle" subsystems. Inversely, a subsystem that is triggered for doing a co-simulation step may be called an "active" system.

One preferred embodiment may set subsystems as idle to wait for up-to-date input values.

According to a preferred embodiment said subsystems may be set active or idle according to the additional (triggering-)steps according to the rule:

- a first subsystem is active only if every other subsystem assigned to send their outputs as input of said first subsystem have their next step-end-time strictly greater that the current time of said first subsystem.

This feature, so called "Causality synchronization", improves the method such that no subsystem may be triggered to start a co-simulation step if they can receive a more recent input value to start their next co-simulation step, and that no subsystem will run with input values coming from a too long time ago (preferably not more than the size of the step of the subunit sending the input data). In short words: accuracy is improved.

According to another embodiment, the selection of idle and active subsystems can be done as if every subsystem were connected to one another. This may be called "Forced synchronization". This way, systems may be idle where they would have been active with the previous process, yet the asynchronization that might appear is controlled. Indeed, even with the inputs-based restriction embodiment reducing asynchronousness, asynchronousness may appear. For instance: inputs-based restriction cannot reduce asynchronousness very much when there are numerous fixed-step subsystems. The embodiment consisting in triggering (active) and stopping (idle) subsystems as if they were all connected to one another avoid the need of storing all outputs data in a history that contains the output data that have been produced by the subsystems with the greater current times and the subsystems with the smaller current times.

According to a preferred embodiment time step size (difference between the next (planned) communication time and the current reached time) of subsystems may be set according to a minimum step size and a maximum step size. This may preferably be done after other method steps changed respective step sizes of subsystems or preferably at the last step size changing step (stage) of said method. At the end of at least one of step size changing method steps, at least one, several or each subsystem may have its step size redefined as follows:

- If the step size is smaller than the minimal one, it may be replaced by the minimal one,
- If the step size is larger than the maximal one, it may be replaced by the maximal one,
- If the step size is between the minimal and the maximal ones, nothing may be done.

Here, the minimal step size is lower than the maximum one. To deactivate this step-adjustment a minimal step size of 0 may be defined and a maximum step size of $+\infty$ may be defined. Subsystems with an imposed step may not go through any - including this - time-step-size changing step (stage).

Another preferred embodiment provides that said simulation of said system is non-iterative, such that said simulation subsystems interact with each other exclusively not iteratively.

Another preferred embodiment provides that said simulation of said system is iterative, such that at least one of said simulation subsystems interacts with at least one other simulation subsystem iteratively, wherein these subsystems are iterative subsystems.

For systems wherein at least one of said iterative subsystems may be provided as a manifold model, at least a twofold-model, comprising a main-model and at least one surrogate model, wherein said surrogate model is capable to repeat at least a single time-step, preferably capable to repeat multiple time-steps, wherein said surrogate model comprises at least partially identical subsystem-step-output parameters and subsystem-step-input parameters as said main-model,

said method comprising the additional steps assigned to a defined subsystem-time-step:

a) said surrogate model receiving subsystem-step-input at least partially originating from at least one other input providing subsystem,
b) said surrogate model calculating subsystem-step-output from said subsystem-step-input at least partially originating from at least one subsystem \n
c) said at least one other input providing subsystem calculating subsystem-step-output including at least a part of the input to be provided for the next iterative loop to said surrogate model,
d) repeating loop-steps a) - c) until a mutual convergence criterium of the subsystem-step-outputs of said input providing subsystems and said surrogate model is met,
e) providing at least partially said converged subsystem-step-outputs to said main-model as at least a part of said subsystem-step-input,
f) said main-model calculating said subsystem-step-output from said subsystem-step-input for said defined subsystem-time-step.

Preferably said surrogate model may be at least a partial linear approximation of said main-model.

Another preferred embodiment provides that said converged subsystem-step-output covers only a part of said subsystem-step-input of said main-model, wherein the method further comprising the additional step (stages) of:

- calculating the remaining part of the subsystem-step-input of said main-model according to step (e) according to claim 1, wherein said main-model is said receiving subsystem.

The invention also relates to a computer-system for simulating a system by applying the computer-implemented method according to at least one of the claims 1 - 12 or according to the above described method respectively its preferred embodiments, comprising:

- at least two simulation subsystems for simulating subunit of said system, wherein said subsystems are designed such that simulating comprises stepwise repeatedly generating subsystem-step-output from subsystem-step-input,

- a communication manager,
- communication channels connecting said subsystems and said communication manager,
- wherein at least one of said subsystems is designed to send connection interface variables as a sending subsystem via said communication channels to said communication manager, said connection interface variables comprising at least one of:

  - numerical data,
  - at least parameters of a data-prediction-model of said numerical data,
  - a data-prediction-model assigned to said numerical data provided by said sending subsystem,

- wherein said numerical data belongs to said subsystem-step-output of said sending subsystem, comprising details about at least one information of the sending subsystem to be sent to at least one receiving subsystem,
- wherein said communication manager is designed to delay the forwarding of said received connection interface variables for a delay-time, wherein said delay-time is suitable to delay transmitting said numerical data until a predetermined point in time,
- wherein said communication manager or said receiving subsystem is designed to predict said numerical data by said data-prediction-model over said delay-time to obtain predicted numerical data of said numerical data provided by said sending subsystem,
- wherein said receiving subsystem is designed to start the next simulation step generating the next subsystem-step-output from subsystem-step-input, wherein said subsystem-step-input comprises said predicted numerical data,
- wherein said sending subsystem and said receiving subsystem respectively belong to said subsystems,
- wherein said computer-system is prepared for starting the next simulation step of said receiving subsystem generating the next subsystem-step-output from subsystem-step-input, wherein said subsystem-step-input comprises said numerical data.

The communication manager may be designed to provide predicted numerical data or said data-prediction-model to said receiving subsystem. If latter is the case said receiving subsystem will be designed to predict said numerical data by said data-prediction-model over said delay-time to obtain predicted numerical data for the next step.

Regarding said surrogate models being provided as linear approximations a preferred embodiment provides that said subsystems may be designed to provide the linear approximation of the internal dynamics (so-called "matrices of the state-space representation") and to use it in order to estimate the output values at the end of the upcoming co-simulation step for different input values. In other words, the output numerical data at the end of the co-simulation step with regards to any time-dependent input may be generated by said surrogate model provided by the respective subsystem itself. The subsystem assigned to the respective surrogate model may perform the co-simulation step once the iterative method on the estimated equations respectively said surrogate model converged.

Generation of surrogate model's output values from input values may be done by:

- Injecting these equations in a solver or by
- Computing the resolvant matrix in the Laplace domain and compute its inverse-Laplace transform using an algorithm (e.g. Gaver-Stehfest, Fourier, Euler, and use the obtained relationship between inputs and outputs to compute the latters.

According to a preferred embodiment the second option may be done as follows (cf. claim 17):
The respective subsystem to be at least partly represented by said surrogate model may be described by a O.D.E. (Ordinary Differential Equations) system:

$$\begin{cases} \dot{x} &= f(t,x,u) \\ y &= g(t,x,u) \end{cases}$$

$$x = x(t) \quad \in \quad L\left(\left[t^{init}, t^{end}\right[, \mathbb{R}^{n_{st}}\right)$$

$$u = u(t) \quad \in \quad L\left(\left[t^{init}, t^{end}\right[, \mathbb{R}^{n_{in}}\right)$$

$$y = y(t) \quad \in \quad L\left(\left[t^{init}, t^{end}\right[, \mathbb{R}^{n_{out}}\right)$$

$$t \in \left[ t^{init}, t^{end} \right[$$

Wherein:

x: state variables (inside of the system). Dimension: nst
u: input variables (required by the system). Dimension: $n_{in}$
y: output variables (produced by the system). Dimension: $n_{out}$

Linearized O.D.E. system (State Space Representation):

$$\begin{cases} \dot{x} & = & Ax + Bu \\ y_L & = & Cx + Du \end{cases}$$

$$A \quad \in \quad M_{n_{st}, n_{st}}(\mathbb{R})$$

$$B \quad \in \quad M_{n_{st}, n_{in}}(\mathbb{R})$$

$$C \quad \in \quad M_{n_{out}, n_{st}}(\mathbb{R})$$

$$D \quad \in \quad M_{n_{out}, n_{in}}(\mathbb{R})$$

$$y_L = y_L(t) \in L\left( \left[ t^{init}, t^{end} \right], \mathbb{R}^{n_{out}} \right)$$

Control part

$$y_C = y - (Cx + Du)$$

$$y_C = y_C(t) \in L\left( \left[ t^{init}, t^{end} \right], \mathbb{R}^{n_{out}} \right)$$

So that

$$y = y_L + y_C$$

Discrete notations

| Value | Notation | Domain |
|---|---|---|
| $y_L(t^{[N]})$ | $y_L^{[N]}$ | $\mathbb{R}^{n_{out}}$ |
| $y_C(t^{[N]})$ | $y_C^{[N]}$ | $\mathbb{R}^{n_{out}}$ |
| $y(t^{[N]})$ | $y^{[N]}$ | $\mathbb{R}^{n_{out}}$ |
| $u(t^{[N]})$ | $u^{[N]}$ | $\mathbb{R}^{n_{in}}$ |

(continued)

| Value | Notation | Domain |
|---|---|---|
| $u(t), t \in [t^{[N]}, t^{[N+1]}[$ | $\left(\sum_{k=0}^{n} a_{jk} t^k\right)_{j \in [\![1, n_{in}]\!]}$ | $(\mathbb{R}_n[t])^{(n_{in})}$ |
| $\check{u}(t), t \in [t^{[N]}, t^{[N+1]}[$ | $\left(\sum_{k=0}^{n} \check{a}_{jk} t^k\right)_{j \in [\![1, n_{in}]\!]}$ | $(\mathbb{R}_n[t])^{(n_{in})}$ |
| $x(t^{[N]})$ | $x^{[N]}$ | $\mathbb{R}^{n_{st}}$ |
| A, B, C, D | A, B, C, D | *cf.* "Linearized O. D. E. system" |

| Value | Estimation | Domain |
|---|---|---|
| $\hat{y}_L(t^{[N+1]})$ | $\mathbb{R}^{n_{out}}$ | $\mathbb{R}^{n_{out}}$ |
| $\hat{y}_C(t^{[N+1]})$ | $\hat{y}_L^{[N+1]}$ | $\hat{y}_C^{[N+1]}$ |
| $\hat{y}(t^{[N+1]})$ | $\hat{y}^{[N+1]}$ | $\mathbb{R}^{n_{out}}$ |

Control part estimation ( $\hat{y}_C^{[N+1]}$ ) :

(polynomial function reconstruction with flexible order, as described previously)

Linear part estimation ( $\hat{y}_L^{[N+1]}$ ) :

$$\delta t^{[N]} := t^{[N+1]} - t^{[N]}$$

Defining a variable change on the vectorial polynomial input function u:

$$\check{u}: \begin{cases} [0, \delta t^{[N]}] & \to & \mathbb{R}^{n_{in}} \\ t & \mapsto & u(t^{[N]} + t) \end{cases}$$

$$\forall t \in [t^{[N]}, t^{[N+1]}[, \forall j \in [\![1, n_{in}]\!], (u(t))_j = \sum_{k=0}^{n} a_{jk} t^k = \sum_{k=0}^{n} \check{a}_{jk} (t - t^{[N]})^k$$
$$= \left(\check{u}(t - t^{[N]})\right)_j$$

$$\forall j \in [\![1, n_{in}]\!],$$

$$\left(\breve{u}(t)\right)_j \quad = \quad \left(u\left(t^{[N]} + t\right)\right)_j$$

$$= \quad \sum_{k=0}^{n} a_{jk}\left(t + t^{[N]}\right)^k$$

$$= \quad \sum_{k=0}^{n} a_{jk} \sum_{l=0}^{k} \binom{k}{l} t^l \left(t^{[N]}\right)^{k-l}$$

$$= \quad \sum_{0 \le l \le k \le n} a_{jk} \binom{k}{l} t^l \left(t^{[N]}\right)^{k-l}$$

$$= \quad \sum_{l=0}^{n} \sum_{k=l}^{n} a_{jk} \binom{k}{l} t^l \left(t^{[N]}\right)^{k-l}$$

$$= \quad \sum_{l=0}^{n} t^l \underbrace{\sum_{k=l}^{n} a_{jk} \binom{k}{l} \left(t^{[N]}\right)^{k-l}}_{\breve{a}_{jl}}$$

$$= \quad \sum_{l=0}^{n} t^l \; \breve{a}_{jl}$$

Switching *l* and *k* in above equation, we get the expressions of the coefficients of $\breve{u}$:

$$\forall j \in [\![1, n_{in}]\!], \forall k \in [\![0, n]\!], \tilde{a}_{jk} = \sum_{l=k}^{n} a_{jl} \binom{l}{k} \left(t^{[N]}\right)^{l-k}$$

$$\breve{\Xi} = \left(\breve{a}_{jk}\right)_{\substack{j \;\in\; [\![1,n_{in}]\!] \\ k \;\in\; [\![0,\; n]\!]}} \in M_{n_{in},n+1}(\mathbb{R})$$

$$\breve{\xi} = \mathrm{vec}\left(\breve{\Xi}^T\right) = \begin{pmatrix} \breve{\Xi}^T e_1 \\ \vdots \\ \breve{\Xi}^T e_{n_{in}} \end{pmatrix} \in \mathbb{R}^{n_{in}(n+1)}$$

where $\forall j \in [\![1, n_{in}]\!], e_j = \left(\delta_{jl}\right)_{l \in [\![1,n_{in}]\!]}$ Laplace transforms:

$$X \quad = \quad X(s) \quad = \quad \mathcal{L}(x)(s) \quad \in \quad L(\mathbb{R}_+, \mathbb{R}^{n_{st}})$$

$$U \quad = \quad U(s) \quad = \quad \mathcal{L}(\breve{u})(s) \quad \in \quad L(\mathbb{R}_+, \mathbb{R}^{n_{in}})$$

$$Y \quad = \quad Y(s) \quad = \quad \mathcal{L}(y_L)(s) \quad \in \quad L(\mathbb{R}_+, \mathbb{R}^{n_{out}})$$

$$\begin{cases} sX - x^{[N]} & = AX + BU \\ Y & = CX + DU \end{cases}$$

$$P = P(s) = C(sI - A)^{-1} \in L\left(\mathbb{R}_+, M_{n_{out}, n_{st}}(\mathbb{R})\right)$$

$$G = G(s) = PB + D \in L\left(\mathbb{R}_+, M_{n_{out}, n_{in}}(\mathbb{R})\right)$$

$G$ can be computed with:
Misra P., and Patel R. V., Computation of Transfer Function Matrices of Linear Multivariable Systems, Automatica, Vol. 23, No. 5, pp. 635-640, 1987.

$P$ can be computed analogously, by considering $n_{out} := n_{st}$, $B := I$ (identity matrix) and $D := 0$ (null matrix).

$$Y = GU + Px^{[N]}$$

$$\begin{aligned} U & = \left(\mathcal{L}(\breve{u})(s)\right)_{j \in [\![1, n_{in}]\!]} \\ & = \left(\mathcal{L}\left(\sum_{k=0}^{n} \breve{a}_{jk} t^k\right)(s)\right)_{j \in [\![1, n_{in}]\!]} \\ & = \left(\sum_{k=0}^{n} \breve{a}_{jk} \mathcal{L}(t^k)(s)\right)_{j \in [\![1, n_{in}]\!]} \\ & = \breve{\Xi}\, \overline{U} \end{aligned}$$

$$\overline{U} = \left(\mathcal{L}(t^k)(s)\right)_{k \in [\![0, n]\!]} = \left(\frac{k!}{s^{k+1}}\right)_{k \in [\![0, n]\!]}$$

The estimator itself:

$$\begin{aligned} \hat{y}_L^{[N+1]} & = \mathcal{L}^{-1}\left(GU + Px^{[N]}\right)\left(\delta t^{[N]}\right) \\ & = \mathcal{L}^{-1}\left(G\breve{\Xi}\overline{U}\right)\left(\delta t^{[N]}\right) + \mathcal{L}^{-1}\left(Px^{[N]}\right)\left(\delta t^{[N]}\right) \\ & = \mathcal{L}^{-1}\left((G \otimes \overline{U}^T)\breve{\xi}\right)\left(\delta t^{[N]}\right) + \mathcal{L}^{-1}\left(Px^{[N]}\right)\left(\delta t^{[N]}\right) \\ & = \mathcal{L}^{-1}(G \otimes \overline{U}^T)\left(\delta t^{[N]}\right)\breve{\xi} + \mathcal{L}^{-1}\left(Px^{[N]}\right)\left(\delta t^{[N]}\right) \\ & = \mathcal{L}^{-1}(\Gamma)\left(\delta t^{[N]}\right)\breve{\Xi} + \mathcal{L}^{-1}\left(Px^{[N]}\right)\left(\delta t^{[N]}\right) \end{aligned}$$

Where $\Gamma$ is a 3rd order tensor:

$$\Gamma = \Gamma(s) = \left((G)_{ij}(\overline{U})_k\right)_{\substack{i \; \in \; [\![1, n_{out}]\!] \\ j \; \in \; [\![1, n_{in}]\!] \\ k \; \in \; [\![0, \; n]\!]}}$$

With the tensor-matrix product defined as follows:

$$\Gamma \breve{\Xi} \;=\; \left( \sum_{j=1}^{n_{in}} \sum_{k=0}^{n} (G)_{ij}(\overline{U})_k \breve{a}_{jk} \right)_{i\in[\![1,n_{out}]\!]}$$

$$=\; \left( \sum_{j=1}^{n_{in}} \sum_{k=0}^{n} \Gamma_{ijk} \breve{a}_{jk} \right)_{i\in[\![1,n_{out}]\!]}$$

$$\mathcal{L}^{-1}(\Gamma)\big(\delta t^{[N]}\big)\breve{\Xi} \;=\; \left( \sum_{j=1}^{n_{in}} \sum_{k=0}^{n} \mathcal{L}^{-1}\big((G)_{ij}(\overline{U})_k\big)\big(\delta t^{[N]}\big)\breve{a}_{jk} \right)_{i\in[\![1,n_{out}]\!]}$$

$$=\; \left( \sum_{j=1}^{n_{in}} \sum_{k=0}^{n} \mathcal{L}^{-1}\big(\Gamma_{ijk}\big)\big(\delta t^{[N]}\big)\breve{a}_{jk} \right)_{i\in[\![1,n_{out}]\!]}$$

| Quantity | Dependencies | | | | |
|---|---|---|---|---|---|
| | $A, B, C, D$ | $t^{[N+1]}$ | $x^{[N]}$ | $s$ | $u$ |
| $\Gamma$ | ✓ | | | ✓ | |
| $P$ | ✓ | | | ✓ | |
| $\Xi$ and $\breve{\Xi}$ | | | | | ✓ |
| $\mathcal{L}^{-1}(\Gamma)(\delta t^{[N]})$ | ✓ | ✓ | | | |
| $\mathcal{L}^{-1}(Px^{[N]})(\delta t^{[N]})$ | ✓ | ✓ | ✓ | | |

This way, iterations are free of cost as every new multi-dimensional input signal will only change the $\Xi$ matrix, and by linearity of the inverse Laplace transform, the new output signal can be generated almost immediately, requiring a single tensor-matrix product.

One of the biggest issues in co-simulation is the long time of execution due to the solvers restarts inside of the systems. These solver-restarts are due to the discontinuities on the input variables at the communication times.

According to a preferred embodiment of the method of the invention said inputs, for receiving subsystems, may be transformed so that they are continuous and have continuous timederivatives. In other words, the subsystems receive C1 interfaces.

According to a preferred embodiment this continuity/smoothness may be achieved by a Hermite interpolation on the times at the beginning and the end of the upcoming step.

As the polynomial input formula is known for each input for each subsystem, it is possible to evaluate it and its time derivative in order to get the values and derivatives at the upcoming communication time. For the current communication time, the method may re-use the imposed value and time-derivative of the previous step - making this data C1-compliant.

In the case where all subsystems are manifold, the iterative solving can be done at once on every surrogate sbsystems in a single iteration, with linear system built by:

- the linear relation the surrogate subsystems represent between all subsystem-step-inputs and all subsystem-step-outputs
- the linear relation that the polynomial data-prediction-models represent between the predicted data and the known values for the upcoming subsystem-time-step - set to the same one for every subsystem as the solving is done once for the complete gathering of subsystems so that it creates a surrogate for the complete system -,
- the remaining part (that cannot be described with the surrogate model) as constant term (independent from the next subsystem-step-inputs expected at the end of said subsystem-time-step), and
- the connection information between the subsystem-step-outputs of all subsystems and the subsystem-step-inputs of these subsystems, which can be seen as an extended notion of permutation which allows a subsystem-step-output to be connected to none, one or several subsystem-step-inputs, and were such relation is linear.

Important advantages of the invention and its preferred embodiments are:

- Robustness and flexibility: The invention enables co-simulation on models with limited knowledge on them: the methods will auto-adapt the communication step size and choose the order to use. A default set of parameters is provided. Also, the invention method allows any kind of co-simulation configuration (accepts system with imposed step mixed with variable-step systems). The surrogate model aspect provides a workaround for systems without rollback to be able to go through an iterative process: the robustness is also in the sense of rejecting no (or less) co-simulation configuration due to the subunits capabilities.
- Performance: The invention method may speed-up a co-simulation compared to its fixed-step zero-order hold non-iterative Jacobi method when asked, thanks to 2 aspects: 1. Defining a minimal step size equal to the one with which non-iterative Jacobi (i.e. most basic co-simulation algorithm, widely used) method gave acceptable results (thus, the invention can only take step of a greater or equal size); 2. Using the C1 interfaces with systems which embeds solvers that can restart faster thanks to this guarantee after each communication time.
- Accuracy: Enabling the use of known solvers thanks to the surrogate model aspect the process is very flexible and enables accurate solutions. Indeed, iterative method (known for being more accurate than the non-iterative ones) are made possible on configuration with systems which are not rollback capable. Moreover, the time-stepping allows the method to take small steps around the stiff parts of the simulation, which helps increasing the accuracy.
- The time-stepper adapts steps when frequent communications are not needed. The above defined scheduling avoids situations with useless but costly communications, interface may be smoothened to avoid disturbing the solvers in the systems

BRIEF DESCRIPTION OF THE DRAWINGS

Embodiments of the invention are now described, by way of example only, with reference to the accompanying drawings, of which:

Figure 1    shows a flow diagram of a method according to the invention;
Figure 2    shows a flow diagram of a method step (f) option according to a preferred embodiment of the invention;
Figure 3    shows a simplified schematic illustration of a computer-system for simulating a system by applying the computer-implemented method.

The illustration in the drawings is in schematic form. It is noted that in different figures, similar or identical elements may be provided with the same reference signs.

DESCRIPTION OF THE DRAWINGS

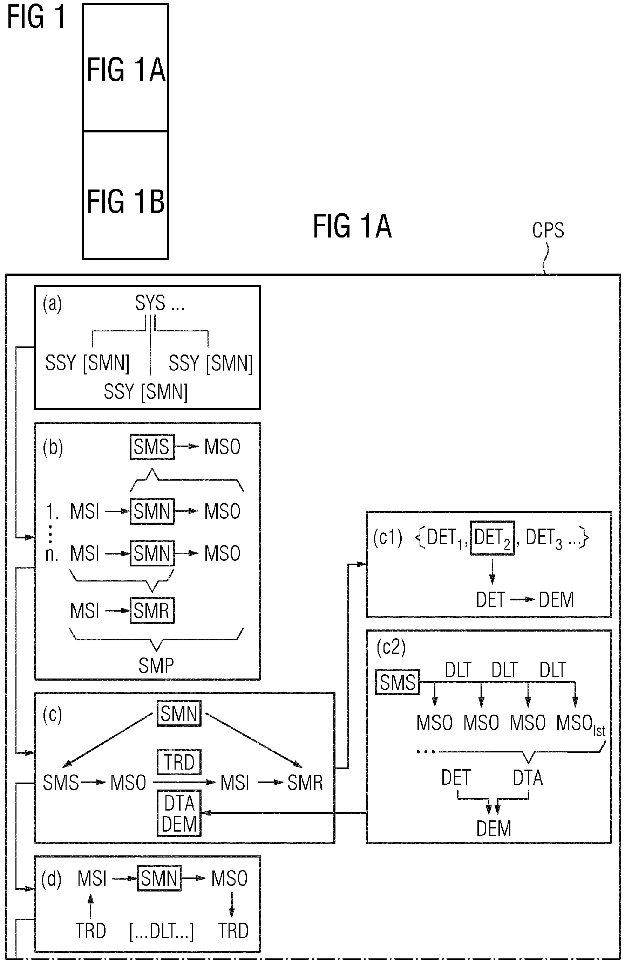

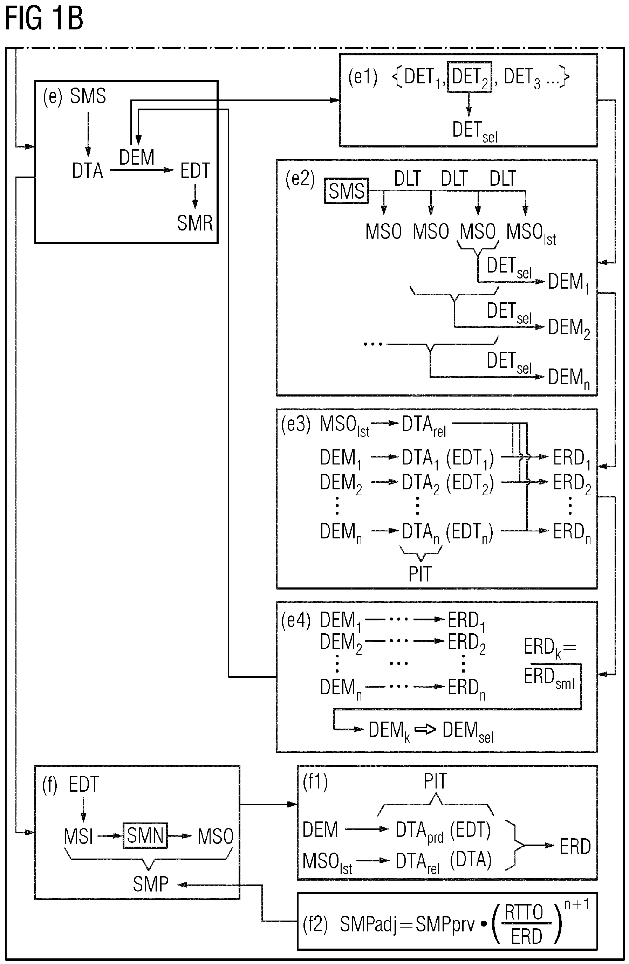

Figure 1 shows a simplified flow diagram illustrating the computer-implemented method for numerical modular simulation of a system SYS, comprising the steps:

(a) disaggregating said system SYS into at least two subunits SSY simulation subsystems SMN,
(b) simulating the respective subunits SSY by operating said n subsystems SMN, wherein said simulating comprises stepwise repeatedly generating subsystem-step-output MSO (where subsystem SMN does the function of a sending subsystem SMS) from subsystem-step-input MSI (where subsystem SMN plays the role of a receiving subsystem SMR) during a respective subsystem-time-step SMP,

characterized by the additional steps:

(c) receiving connection interface variables TRD from a sending subsystem SMS comprising at least one of:

- numerical data DTA,
- at least parameters of a data-prediction-model DEM of said numerical data DTA,
- a data-prediction-model DEM assigned to said numerical data DTA,

wherein said numerical data DTA belongs to said subsystem-step-output MSO of said sending subsystem SMS, comprising details about at least one information of the sending subsystem SMS to be sent to at least one receiving subsystem SMR,
wherein said sending subsystem SMS and said receiving subsystem SMR are respectively functions done by said subsystems SMN,

(d) delaying the forwarding of said received connection interface variables TRD for a delay-time DLT,

(e) extrapolating said numerical data DTA by said data-prediction-model DEM over said delay-time DLT to obtain predicted numerical data EDT of said numerical data DTA, which may preferably be computed in the corresponding receiving subsystem SMR,

(f) starting the next simulation step of said subsystem SMN generating the next subsystem-step-output MSO from subsystem-step-input MSI, wherein said subsystem-step-input MSI comprises said predicted numerical data EDT.

Above step (c) may comprise the additional steps of:

(c1) determining said data-prediction-model DEM by selecting a data-prediction-model-type DET from a group of predetermined functions and

(c2) calibrating said data-prediction-model DEM from respective said sending subsystem's SMS numerical data DTA of subsystem-step-output MSO of the previous 1, 2, 3 or more steps, including the latest one $MSO_{lst}$.

Above step (f) may comprise the additional steps of:

(f1) determining the error ERD by comparing said numerical data $DTA_{prd}$ (in this case: predicted data EDT) calculated by said data-prediction-model DEM on basis of at least the step before the latest subsystem-step-output MSO to the numerical data $DTA_{rel}$ corresponding to latest subsystem-step-output $MSO_{lst}$ for the same point in time PIT for said sending subsystem SMS,

(f2) adjusting the subsystem-time-step SMP of said sending subsystem SMS according to a predetermined relation between error ERD and subsystem-time-step SMP. Said predetermined relation between error ERD and subsystem-time-step SMP may be defined as:

Adjusted SMP will be refered to as $SMP_{adj}$, and the previous SMP will be referd to as $SMP_{prv}$:

$$SMP_{adj} = SMP_{prv}*BETA*(RTTO/ERD)^n+1$$

wherein:

| | |
|---|---|
| n: | polynomial order of data-prediction-model DEM |
| $SMP_{prv}$: | SMP of the previous co-simulation step |
| RTTO: | relative tolerance |
| ERD: | error, preferably a relative error |
| BETA: | safety coefficient in [0.5, 1.0[, preferably 0.9 |

Setting delay-time DLT to the length of $SMP_{adj}$ may be suitable to delay transmitting said numerical data DTA until a predetermined point in time PIT when said receiving subsystem SMR is ready to receive said numerical data DTA.

Above step (e) may comprise the additional steps of:

(e1) selecting a single data-prediction-model-type $DET_{sel}$ from said group of predetermined functions (data-prediction-model-types) and

(e2) calibrating data-prediction-models $DEM_1$, ..., $DEM_n$ - of the selected data-prediction-model-type DET - from respective said sending subsystem's SMS numerical data DTA of subsystem-step-output MSO of the previous 1, 2, 3 or more steps (excluding the latest subsystem-step-output $MSO_{lst}$),

(e3) determining the error ERD for each said data-prediction-model $DEM_k$ by comparing said numerical data $DTA_k$ calculated by said data-prediction-models $DEM_k$ on basis of at least the step before the latest subsystem-step-output $MSO_{lst}$ to the latest numerical data $DTA_{rel}$ corresponding to the latest subsystem-step-output $MSO_{lst}$ for the same point in time PIT for said sending subsystem SMS,

(e4) selecting from the selected data-prediction-model-type $DET_{sel}$ the data-prediction-model $DEM_k$ with the smallest absolute error $ERD_{sml}$. This selected data-prediction-model $DEM_{sel} = DEM_k$ is now the data-prediction-model to use.

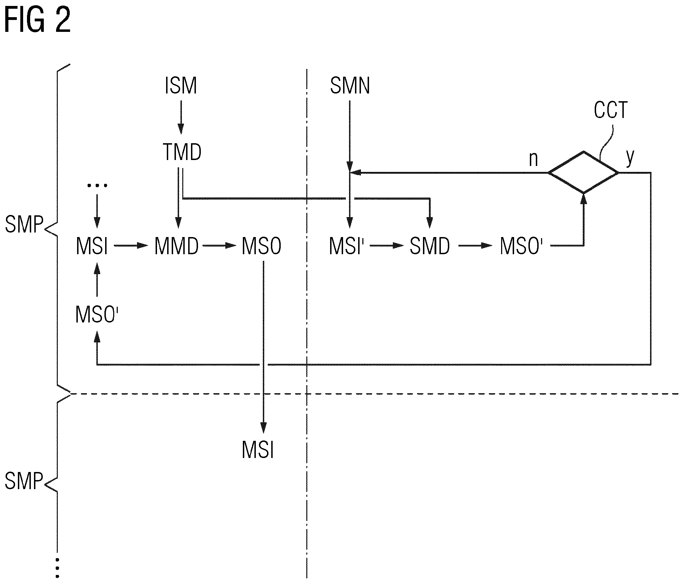

As illustrated in Fig. 2, above step (f) may involve at least one iterative subsystems ISM being provided as a manifold model, at least a twofold-model TMD, comprising a main-model MMD and at least one surrogate model SMD, wherein said surrogate model SMD is capable to repeat at least a single co-simulation step, preferably capable to repeat multiple co-simulation steps, wherein said surrogate model SMD comprises at least partially identical subsystem-step-output MSO parameters and subsystem-step-input MSI parameters as said main-model MMD,

said method comprising the additional steps assigned to a defined subsystem-time-step SMP:

a) said surrogate model SMD receiving subsystem-step-input MSI at least partially originating from at least one other input providing subsystem SMN,

b) said surrogate model SMD calculating subsystem-step-output MSO from said subsystem-step-input MSI, said subsystem-step-input MSI at least partially originating from one of said other input providing subsystems SMN calculating subsystem-step-output MSO including at least a part of the input to be provided for the next iterative loop to said surrogate model SMD,

c) repeating loop-steps a) - b) until a mutual convergence criterium CCT of the subsystem-step-outputs MSO of said input providing subsystems SMN and said surrogate model SMD is met,

d) providing at least partially said converged subsystem-step-outputs MSO to said main-model MMD as at least a part of said subsystem-step-input MSI,

e) said main-model MMD calculating said subsystem-step-output MSO from said subsystem-step-input MSI for said defined subsystem-time-step SMP.

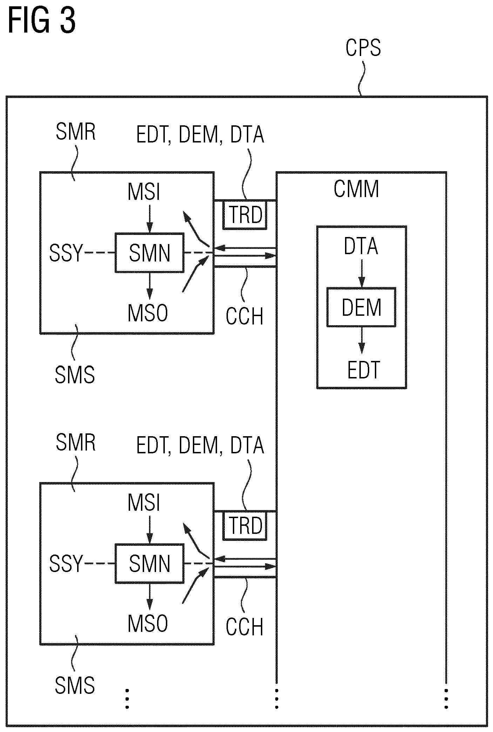

Figure 3 schematically illustrates a simplified computersystem CPS for simulating a system by applying the computer-implemented method according to the invention and optionally to any combination of the preferred embodiments mentioned, comprising:

- at least two simulation subsystems SMN for simulating subunit SSY of said system SYS, wherein said subsystems SMN are designed such that simulating comprises stepwise repeatedly generating subsystem-step-output MSO from subsystem-step-input MSI,
- a communication manager CMM,
- communication channels CCH connecting said subsystems SMN and said communication manager CMM,
- wherein at least one of said subsystems SMN is designed to send connection interface variables TRD as a sending subsystem SMS via said communication channels CCH to said communication manager CMM, said connection interface variables TRD comprising at least one of:

  - numerical data DTA,
  - at least parameters of a data-prediction-model DEM of said numerical data DTA,
  - a data-prediction-model DEM assigned to said numerical data DTA provided by said sending subsystem SMS,

- wherein said numerical data DTA belongs to said subsystem-step-output MSO of said sending subsystem SMS, comprising details about at least one information of the sending subsystem SMS to be sent to at least one receiving subsystem SMR,
- wherein said communication manager CMM or said receiving subsystem SMR is designed to predict said numerical data DTA by said data-prediction-model DEM to obtain predicted numerical data EDT of said numerical data DTA provided by said sending subsystem SMS,
- wherein said receiving subsystem SMR is designed to start the next simulation step generating, over said delay time DLT, the next subsystem-step-output MSO from subsystem-step-input MSI, wherein said subsystem-step-input MSI comprises said predicted numerical data EDT,
- wherein said sending subsystem SMS and said receiving subsystem SMR are functions done by said subsystems SMN,
- wherein said computer-system CPS is prepared for starting the next simulation step of said receiving subsystem SMR generating the next subsystem-step-output MSO from subsystem-step-input MSI, wherein said subsystem-step-input MSI comprises said predicted numerical data EDT.

Although the present invention has been described in detail with reference to the preferred embodiments, it must be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

**Claims**

1. A computer-implemented method for numerical modular simulation of a system (SYS) said system being disaggregated (a) into at least two subunit (SSY) simulation subsystems (SMN),
said method comprising:
(b) simulating the respective subunits (SSY) stepwise repeatedly generating subsystem-step-output (MSO) from subsystem-step-input (MSI) during a respective subsystem-time-step (SMP),
**characterized by** the additional steps for enabling numerical modular simulation of said system (SYS) even if different platforms or different internal solvers are used for each subunit (SSY):

   (c) transmitting subsystem-step-inputs (MSI) to a receiving subsystem (SMR) and simulating this subsystem (SMN) over a delay-time (DLT) before its subsystem-step-outputs (MSO) are generated,
   (d) receiving connection interface variables (TRD) from a sending subsystem (SMS) comprising at least one of:

      - numerical data (DTA),
      - at least parameters of a data-prediction-model (DEM) of said numerical data (DTA),
      - a data-prediction-model (DEM) assigned to said numerical data (DTA),

   wherein said numerical data (DTA) belongs to said subsystem-step-output (MSO) of said sending subsystem (SMS), comprising details about at least one information of the sending subsystem (SMS) to be sent to at least one receiving subsystem (SMR),
   (e) predicting said numerical data (DTA) by a data-prediction-model (DEM) over said delay-time (DLT) to obtain predicted numerical data (EDT) of said interface variables (TRD) provided by said sending subsystem (SMS),
   (f) starting the next simulation step of said receiving subsystem (SMR) generating the next subsystem-step-output (MSO) from subsystem-step-input (MSI), wherein said subsystem-step-input (MSI) comprises said predicted numerical data (EDT).

2. Method according to claim 1, comprising the additional steps of:

      - determining said data-prediction-model (DEM) by selecting a data-prediction-model-type (DET) from a group of predetermined functions and
      - calibrating said data-prediction-model (DEM) to respective said sending subsystem's (SMS) numerical data (DTA) of subsystem-step-output (MSO) of the previous 1, 2, 3 or more steps, excluding the latest generated subsystem-step-output ($MSO_{lst}$).

3. Method according to claim 2,
wherein said data-prediction-model (DEM) is a polynomial function.

4. Method according to claim 1 or 2, comprising the steps:

      selecting said data-prediction-model (DEM) after a sending subsystem (SMS) co-simulation step (SMP),
      calibrating said data-prediction-model (DEM) according to a preselected data-prediction-model-type (DET) before receiving subsystem (SMR) prediction using the selected data-prediction-model (DEM) on the corresponding step of the corresponding sending subsystem (SMS).

5. Method according to claim 3, comprising the steps:

      selecting the polynomial degree of said data-prediction-model (DEM) after a sending subsystem (SMS) co-simulation step (SMP),
      calibrating said data-prediction-model (DEM) according to a preselected data-prediction-model-type (DET) before receiving subsystem (SMR) prediction using the selected polynomial degree on the corresponding step of the corresponding sending subsystem (SMS).

6. Method according to claim 3,4 or 5,
comprising the additional step of:

      - selecting a polynomial order of the data-prediction-model-type (DET)
      - determining the error (ERD) by comparing said numerical data ($DTA_{prd}$) calculated by said data-prediction-model (DEM) on basis of at least the subsystem-step-outputs (MSO) of the step before the latest subsystem-step-output ($MSO_{lst}$) to the latest numerical data ($DTA_{rel}$) of subsystem-step-output ($MSO_{lst}$) for the same point in time (PIT) for said sending subsystem (SMS),
- repeating at least once the steps of:

  - selecting a polynomial order, wherein a different polynomial order is selected than during the foregoing repetitions, and
  - determining the associated error (ERD)

- choosing the polynomial order of the data-prediction-models (DEM) to be the one with the smallest error (ERD) among the data-prediction-models (DEM) which respectively were selected and error (ERD)-determined during the foregoing repetition step(s),
- in case all polynomial orders of the data-prediction-model-type generate an error greater than a given threshold (TRS), using a constant data-prediction-model (DEM) [order 0].

7. Method according to claim 6,
comprising the additional step of:

   - extending said polynomial degree of an obtained data-prediction-models (DEM) through an Hermite interpolation.

8. Method according to at least one of the previous claims 1 to 7, comprising the additional steps of:

   - determining the error (ERD) by comparing said numerical data ($DTA_{prd}$) calculated by said data-prediction-model (DEM) on basis of at least the step before the latest subsystem-step-output ($MSO_{lst}$) to the latest numerical data ($DTA_{rel}$) of subsystem-step-output ($MSO_{lst}$) for the same point in time (PIT) for said sending subsystem (SMS),
   - adjusting the subsystem-time-step (SMP) of said sending subsystem (SMS) according to a predetermined relation between error (ERD) and the previous subsystem-time-step ($SMP_{prv}$).

9. Method according to claim 8,
wherein said predetermined relation between error (ERD) and the previous subsystem-time-step ($SMP_{prv}$) is a decreasing function.

10. Method according to claim 9,
wherein said predetermined relation linking the adjusted subsystem-time-step ($SMP_{adj}$) to the error (ERD) and the previous subsystem-time-step ($SMP_{prv}$) is defined as:

$$(SMP_{adj}) = (SMP_{prv}) \; * \; BETA \; * \; (RTTO/ERD)\,\hat{}\,(n+1)$$

wherein:

n: polynomial degree of data-prediction-model (DEM)
RTTO: relative tolerance
ERD: error, preferably a relative error
BETA: safety coefficient in [0.5, 1.0[, preferably 0.9

11. Method according to at least one of the previous claims 8 to 10, comprising the additional step of,

   - for at least one subsystem (SMS) restricting an upcoming subsystem-time-step (SMP) such that it corresponds to the first upcoming end-of-step time of any subsystem (SMS) that has outputs connected with inputs to the subsystem (SMS) to be time-step-restricted.

12. Method according to at least the previous claims 11, comprising the additional steps of,

   - selecting a subsystem (SMS) for which all subsystem-step-outputs (MSO) are connected with subsystem-step-inputs (MSI) of subsystems (SMR) which do not support variable subsystem-time-step (SMP),

- extending the selected subsystem's (SMS) upcoming subsystem-time-step (SMP) size until the very next end-of-step of the subsystems (SMR) that have subsystem-step-inputs (MSI) connected to said subsystem-step-outputs (MSO).

13. Method according to at least one preceding claim,
wherein said delay-time (DLT) is suitable to delay transmitting said numerical data (DTA) until a predetermined point in time (PIT) when said sending subsystem (SMR) provides a reliable data-prediction-model (DEM) regarding a given relative tolerance (RTTO).

14. Method according to at least one preceding claim, comprising the additional steps:

- selecting a single data-prediction-model-type (DET) from said group of predetermined data-prediction-model-types (DET) and
- respectively calibrating at least two data-prediction-models (DEM) of the selected type to respective said sending subsystem's (SMS) numerical data (DTA) of subsystem-step-output (MSO) of the previous 1, 2, 3 or more steps, excluding the last one ($MSO_{lst}$),
- determining the error (ERD) for each of said data-prediction-model (DEM) by comparing said numerical data ($DTA_{prd}$) calculated by said data-prediction-model (DEM) on basis of at least the step before the latest subsystem-step-output ($MSO_{lst}$) to the latest numerical data ($DTA_{rel}$) of subsystem-step-output ($MSO_{lst}$) for the same point in time (PIT) for said sending subsystem (SMS),
- selecting from the data-prediction-models (DEM) - of the selected data-prediction-model-type (DET) - the data-prediction-model (DEM) with the smallest error (ERD).

15. Method according to at least one preceding claims 1-14, wherein said simulation of said system (SYS) is iterative, such that at least one of said simulation subsystems (SMN) interacts with at least one other simulation subsystem (SMN) iteratively, wherein these subsystems are iterative subsystems (ISM).

16. Method according to claim 15,

wherein at least one of said iterative subsystems (ISM) is provided as a manifold model, at least a twofold-model (TMD), comprising a main-model (MMD) and at least one surrogate model (SMD), wherein said surrogate model (SMD) is capable to repeat at least a single co-simulation step, preferably capable to repeat multiple co-simulation steps,
wherein said surrogate model (SMD) comprises at least partially identical subsystem-step-output (MSO) parameters and subsystem-step-input (MSI) parameters as said main-model (MMD),
said method comprising the additional steps assigned to a defined subsystem-time-step (SMP):

a) said surrogate model (SMD) receiving subsystem-step-input (MSI) at least partially originating from at least one other input providing subsystem (SMN),
b) said surrogate model (SMD) calculating subsystem-step-output (MSO) from said subsystem-step-input (MSI), said subsystem-step-inputs (MSI) at least partially originating from at least one of said at least one other input providing subsystem (SMN) calculating subsystem-step-output (MSO) including at least a part of the input to be provided for the next iterative loop to said surrogate model (SMD),
c) repeating loop-steps a) - b) until a mutual convergence criterium (CCT) of the subsystem-step-outputs (MSO) of said input providing subsystems (SMN) and said surrogate model (SMD) is met,
d) providing at least partially said converged subsystem-step-outputs (MSO) to said main-model (MMD) as at least a part of said subsystem-step-input (MSI),
e) said main-model (MMD) calculating said subsystem-step-output (MSO) from said subsystem-step-input (MSI) for said defined subsystem-time-step (SMP).

17. Method according to claim 16, comprising the additional steps:

I. Defining matrices A, B, C and D denoting the state-space representation of the linearization of the model (MMD),
II. Computing the resolvant matrix of the state-space representation of the system defined by $C((sI-A)^{-1})B+D$, wherein $^{-1}$ denotes the matrix inversion,
III. Computing the Laplace transform of the monomials basis as a first single-column matrix filled with the Laplace transforms of respectively 1, t, t^2, ... wherein t denotes the time, and where the exponent reaches the maximum polynomial degree of the polynomial subsystem-step-inputs (MSI),

IV. Computing the Kronecker product of said resolvant matrix and said first single-column matrix,

V. Gathering the polynomial coefficients of every subsystem-step-input (MSI) in a second single-column matrix,

VI. Computing the matricial product ($\mathcal{L}^{-1}(\Gamma)(\partial t^{[N]}) \times \check{\Xi}$) of the inverse Laplace transform of said Kronecker product and said second single-column matrix,

VII. Computing a matrix P as $C \times (sI-A)^{-1}$, wherein I denotes the identity matrix of the same size than A, and wherein s denotes the variable of the Laplace domain,

VIII. Computing the matrix-vector product of said matrix P and the vector containing the state variables of said subsystem at the beginning of said co-simulation step (SMP), corresponding to the end of the previous co-simulation step,

IX. Computing the inverse Laplace transform ($\mathcal{L}^{-1}(Px^{[N]})(\partial t^{[N]})$) of said matrix-vector product, over the length of the co-simulation step (SMP) (corresponding to the delay-time (DLT)),

X. Computing the linear part as the sum of said matricial product ($\mathcal{L}^{-1}(\Gamma)(\partial t^{[N]}) \times \check{\Xi}$) and said inverse Laplace transform ($\mathcal{L}^{-1}(Px^{[N]})(\partial t^{[N]})$),

XI. Computing the control part according to step (e) according to claim 1, 2 or 3, wherein said main-model (MMD) is said receiving subsystem (SMR),

XII. Computing the subsystem-step-output (MSO) of the surrogate model (SMD) as the sum of said linear part and said control part.

18. Method according to claim 16,
wherein said surrogate model (SMD) is at least a partial linear approximation of said main-model (MMD).

19. Method according to claim 16, 17 or 18,

wherein said converged subsystem-step-output (MSO) covers only a part of said subsystem-step-input (MSI) of said main-model (MMD),
the method comprising the additional step of:

- calculating the remaining part of the subsystem-step-input (MSI) of said main-model (MMD) according to step (e) according to claim 1, 2 or 3, wherein said main-model (MMD) is said receiving subsystem (SMR).

20. Method according to claim 17 or 18, wherein all subsystems (SMN) are manifold and where the iterative solving can be done at once on every surrogate subsystems (SMD) in a single iteration, using a linear system built by:

- the linear relation the surrogate subsystems represent between all subsystem-step-inputs (SMI) and all subsystem-step-outputs (SMO)
- the linear relation that the polynomial data-prediction-models (DEM) represent between the predicted data (EDT) and the known values ($DAT_{rel}$) for the upcoming subsystem-time-step (SMP) - set to the same one for every subsystem (SMN) as the solving is done once for the complete gathering of subsystems so that it creates a surrogate for the complete system (SYS) -, according to at least one of claims 3 - 7,
- the remaining part described in claim 16 as constant term (independent from the next subsystem-step-inputs (MSI) expected at the end of said subsystem-time-step (SMP)), and
- the connection information between the subsystem-step-outputs (MSO) of all subsystems (SMS) and the subsystem-step-inputs (MSI) of these subsystems (SMR), which can be seen as an extended notion of permutation which allows a subsystem-step-output (MSO) to be connected to none, one or several subsystem-step-inputs (MSI), and were such relation is linear.

21. Computer system (CPS) comprising at least one processor for enabling numerical modular simulation of a system (SYS) even if different platforms or different internal solvers are used for each subunit (SSY) **characterized by** being arranged and configured to execute the steps of the computer-implemented method according to any one of the preceding claims.

22. A computer-readable medium for enabling numerical modular simulation of a system (SYS) even if different platforms or different internal solvers are used for each subunit (SSY) encoded with executable instructions, **characterized in that** when executed, cause the computer system (CPS) according to claim 21 to carry out a method according to any one of claims 1 to 20.

**Patentansprüche**

1. Computerimplementiertes Verfahren zur numerischen modularen Simulation eines Systems (SYS), wobei das System in mindestens zwei Subeinheit(SSY)-Simulationssubsysteme (SMN) disaggregiert wird,

   wobei das Verfahren Folgendes umfasst:
   (b) schrittweises Simulieren der jeweiligen Subeinheiten (SSY) unter wiederholter Erzeugung einer Subsystemschrittausgabe (MSO) aus einer Subsystemschritteingabe (MSI) während eines jeweiligen Subsystemzeitschrittes (SMP),
   charakterisiert durch die zusätzlichen Schritte zum Ermöglichen einer numerischen modularen Simulation des Systems (SYS) selbst dann, wenn unterschiedliche Plattformen oder unterschiedliche interne Solver für jede Subeinheit (SSY) verwendet werden:

   (c) Übertragen von Subsystemschritteingaben (MSI) an ein Empfangssubsystem (SMR) und Simulieren dieses Subsystems (SMN) über eine Verzögerungszeit (DLT) vor Erzeugung von dessen Subsystemschrittausgaben (MSO),
   (d) Empfangen von Verbindungsschnittstellenvariablen (TRD) von einem Sendesubsystem (SMS), die mindestens eines der Folgenden umfassen:

   - numerische Daten (DTA),
   - zumindest Parameter eines Datenvorhersagemodells (DEM) der numerischen Daten (DTA),
   - ein den numerischen Daten (DTA) zugewiesenes Datenvorhersagemodell (DEM),

   wobei die numerischen Daten (DTA) zu der Subsystemschrittausgabe (MSO) des Sendesubsystems (SMS) gehören, umfassend Einzelheiten über mindestens eine Information des Sendesubsystems (SMS), die an mindestens ein Empfangssubsystem (SMR) zu senden ist,
   (e) Vorhersagen der numerischen Daten (DTA) durch ein Datenvorhersagemodell (DEM) über die Verzögerungszeit (DLT), um vorhergesagte numerische Daten (EDT) der durch das Sendesubsystem (SMS) bereitgestellten Schnittstellenvariablen (TRD) zu erhalten,
   (f) Beginnen des nächsten Simulationsschrittes des Empfangssubsystem (SMR) unter Erzeugung der nächsten Subsystemschrittausgabe (MSO) aus einer Subsystemschritteingabe (MSI), wobei die Subsystemschritteingabe (MSI) die vorhergesagten numerischen Daten (EDT) umfasst.

2. Verfahren nach Anspruch 1, umfassend die folgenden zusätzlichen Schritte:

   - Bestimmen des Datenvorhersagemodells (DEM) durch Auswählen eines Datenvorhersagemodelltyps (DET) aus einer Gruppe vorbestimmter Funktionen und
   - Kalibrieren des Datenvorhersagemodells (DEM) auf jeweilige numerische Daten (DTA) des Sendesubsystems (SMS) der Subsystemschrittausgabe (MSO) der vorherigen 1, 2, 3 oder mehr Schritte außer der zuletzt erzeugten Subsystemschrittausgabe (MSO$_{lst}$).

3. Verfahren nach Anspruch 2,
   wobei das Datenvorhersagemodell (DEM) eine Polynomfunktion ist.

4. Verfahren nach Anspruch 1 oder 2, umfassend die folgenden Schritte:

   Auswählen des Datenvorhersagemodells (DEM) nach einem Sendesubsystem(SMS)-Cosimulationsschritt (SMP),
   Kalibrieren des Datenvorhersagemodells (DEM) gemäß einem vorab ausgewählten Datenvorhersagemodelltyp (DET) vor Empfang einer Subsystem(SMR)-Vorhersage unter Verwendung des ausgewählten Datenvorhersagemodells (DEM) in dem entsprechenden Schritt des entsprechenden Sendesubsystems (SMS).

5. Verfahren nach Anspruch 3, umfassend die folgenden Schritte:

   Auswählen des Polynomgrads des Datenvorhersagemodells (DEM) nach einem Sendesubsystem(SMS)-Cosimulationsschritt (SMP),
   Kalibrieren des Datenvorhersagemodells (DEM) gemäß einem vorab ausgewählten Datenvorhersagemodelltyp (DET) vor Empfang einer Subsystem(SMR)-Vorhersage unter Verwendung des ausgewählten Polynomgrads in dem entsprechenden Schritt des entsprechenden Sendesubsystems (SMS).

6. Verfahren nach Anspruch 3,4 oder 5,
umfassend den folgenden zusätzlichen Schritt:

- Auswählen einer Polynomordnung des Datenvorhersagemodelltyps (DET),
- Bestimmen des Fehlers (ERD) durch Vergleichen der numerischen Daten ($DTA_{prd}$), die durch das Datenvorhersagemodell (DEM) auf Grundlage zumindest der Subsystemschrittausgaben (MSO) des Schrittes vor der aktuellsten Subsystemschrittausgabe ($MSO_{lst}$) berechnet werden, mit den aktuellsten numerischen Daten ($DTA_{rel}$) der Subsystemschrittausgabe ($MSO_{lst}$) für denselben Zeitpunkt (PIT) für das Sendesubsystem (SMS),
- mindestens einmaliges Wiederholen der folgenden Schritte:

- Auswählen einer Polynomordnung, wobei eine andere Polynomordnung als während der vorherigen Wiederholungen ausgewählt wird, und
- Bestimmen des assoziierten Fehlers (ERD),

- Auswählen der Polynomordnung der Datenvorhersagemodelle (DEM) als diejenige mit dem kleinsten Fehler (ERD) unter den Datenvorhersagemodellen (DEM), die jeweils während des einen oder der mehreren vorherigen Wiederholungsschritte ausgewählt und fehler(ERD)-bestimmt wurden,
- falls alle Polynomordnungen des Datenvorhersagemodelltyps einen Fehler erzeugen, der größer als eine gegebene Schwelle (TRS) ist, Verwenden eines konstanten Datenvorhersagemodells (DEM) [Ordnung 0].

7. Verfahren nach Anspruch 6,
umfassend den folgenden zusätzlichen Schritt:

- Erweitern des Polynomgrads eines erhaltenen Datenvorhersagemodells (DEM) mittels einer Hermite-Interpolation.

8. Verfahren nach mindestens einem der vorhergehenden Ansprüche 1 bis 7, umfassend die folgenden zusätzlichen Schritte:

- Bestimmen des Fehlers (ERD) durch Vergleichen der numerischen Daten ($DTA_{prd}$), die durch das Datenvorhersagemodell (DEM) auf Grundlage zumindest des Schrittes vor der aktuellsten Subsystemschrittausgabe ($MSO_{lst}$) berechnet werden, mit den aktuellsten numerischen Daten ($DTA_{rel}$) der Subsystemschrittausgabe ($MSO_{lst}$) für denselben Zeitpunkt (PIT) für das Sendesubsystem (SMS),
- Anpassen des Subsystemzeitschrittes (SMP) des Sendesubsystems (SMS) gemäß einer vorbestimmten Beziehung zwischen dem Fehler (ERD) und dem vorherigen Subsystemzeitschritt ($SMP_{prv}$).

9. Verfahren nach Anspruch 8,
wobei die vorbestimmte Beziehung zwischen dem Fehler (ERD) und dem vorherigen Subsystemzeitschritt ($SMP_{prv}$) eine fallende Funktion ist.

10. Verfahren nach Anspruch 9,
wobei die vorbestimmte Beziehung, die den angepassten Subsystemzeitschritt ($SMP_{adj}$) mit dem Fehler (ERD) und dem vorherigen Subsystemzeitschritt ($SMP_{prv}$) verknüpft, wie folgt definiert ist:

$$(SMP_{adj}) = (SMP_{prv}) * BETA * (RTTO/ERD) \wedge (n+1)$$

wobei:

n: Polynomgrad des Datenvorhersagemodells (DEM)
RTTO: relative Toleranz
ERD: Fehler, bevorzugt relativer Fehler
BETA: Sicherheitskoeffizient in [0,5, 1,0[, bevorzugt 0,9.

11. Verfahren nach mindestens einem der vorhergehenden Ansprüche 8 bis 10, umfassend den folgenden zusätzlichen Schritt:

- für mindestens ein Subsystem (SMS), Einschränken eines anstehenden Subsystemzeitschrittes (SMP), sodass er der ersten anstehenden Schrittendzeit eines Subsystems (SMS) entspricht, das Ausgaben aufweist, die mit Eingaben des zeitschritteinzuschränkenden Subsystems (SMS) verbunden sind.

12. Verfahren nach mindestens dem vorherigen Anspruch 11, umfassend die folgenden zusätzlichen Schritte:

- Auswählen eines Subsystems (SMS), für das alle Subsystemschrittausgaben (MSO) mit Subsystemschritteingaben (MSI) von Subsystemen (SMR), die keinen variablen Subsystemzeitschritt (SMP) unterstützen, verbunden sind,
- Erweitern der Größe des anstehenden Subsystemzeitschrittes (SMP) des ausgewählten Subsystems (SMS) bis zu dem unmittelbar nächsten Schrittende der Subsysteme (SMR), die mit den Subsystemschrittausgaben (MSO) verbundene Subsystemschritteingaben (MSI) aufweisen.

13. Verfahren nach mindestens einem vorhergehenden Anspruch, wobei die Verzögerungszeit (DLT) dazu geeignet ist, das Übertragen der numerischen Daten (DTA) bis zu einem vorbestimmten Zeitpunkt (PIT) zu verzögern, zu dem das Sendesubsystem (SMR) ein zuverlässiges Datenvorhersagemodell (DEM) bezüglich einer gegebenen relativen Toleranz (RTTO) bereitstellt.

14. Verfahren nach mindestens einem vorhergehenden Anspruch, umfassend die folgenden zusätzlichen Schritte:

- Auswählen eines einzelnen Datenvorhersagemodelltyps (DET) aus der Gruppe vorbestimmter Datenvorhersagemodelltypen (DET) und
- jeweiliges Kalibrieren von mindestens zwei Datenvorhersagemodellen (DEM) des ausgewählten Typs auf jeweilige numerische Daten (DTA) des Sendesubsystems (SMS) der Subsystemschrittausgabe (MSO) der vorherigen 1, 2, 3 oder mehr Schritte außer der aktuellsten ($MSO_{lst}$),
- Bestimmen des Fehlers (ERD) für jedes Datenvorhersagemodell (DEM) durch Vergleichen der numerischen Daten ($DTA_{prd}$), die durch das Datenvorhersagemodell (DEM) auf Grundlage zumindest des Schrittes vor der aktuellsten Subsystemschrittausgabe ($MSO_{lst}$) berechnet werden, mit den aktuellsten numerischen Daten ($DTA_{rel}$) der Subsystemschrittausgabe ($MSO_{lst}$) für denselben Zeitpunkt (PIT) für das Sendesubsystem (SMS),
- Auswählen, aus den Datenvorhersagemodellen (DEM) - des ausgewählten Datenvorhersagemodelltyps (DET) - des Datenvorhersagemodells (DEM) mit dem kleinsten Fehler (ERD).

15. Verfahren nach mindestens einem der vorhergehenden Ansprüche 1 bis 14, wobei die Simulation des Systems (SYS) iterativ ist, sodass mindestens eines der Simulationssubsysteme (SMN) mit mindestens einem anderen Simulationssubsystem (SMN) iterativ interagiert, wobei diese Subsysteme iterative Subsysteme (ISM) sind.

16. Verfahren nach Anspruch 15,

wobei mindestens eines der iterativen Subsysteme (ISM) als ein mannigfaltiges Modell, zumindest ein zweifaltiges Modell (TMD), das ein Hauptmodell (MMD) und mindestens ein Surrogatmodell (SMD) umfasst, bereitgestellt ist, wobei das Surrogatmodell (SMD) dazu in der Lage ist, zumindest einen einzelnen Cosimulationsschritt zu wiederholen, bevorzugt dazu in der Lage ist, mehrere Cosimulationsschritte zu wiederholen,
wobei das Surrogatmodell (SMD) zumindest teilweise identische Subsystemschrittausgabe(MSO)-Parameter und Subsystemschritteingabe(MSI)-Parameter als das Hauptmodell (MMD) umfasst,
wobei das Verfahren die folgenden zusätzlichen Schritte, die einem definierten Subsystemzeitschritt (SMP) zugewiesen sind, umfasst:

a) Empfangen, durch das Surrogatmodell (SMD), einer Subsystemschritteingabe (MSI), die zumindest teilweise von mindestens einem anderen Eingabebereitstellungssubsystem (SMN) stammt,
b) Berechnen, durch das Surrogatmodell (SMD), einer Subsystemschrittausgabe (MSO) anhand der Subsystemschritteingabe (MSI), wobei die Subsystemschritteingaben (MSI) zumindest teilweise von mindestens einem des mindestens einen anderen Eingabebereitstellungssubsystems (SMN) stammt, wobei eine Subsystemschrittausgabe (MSO) einschließlich zumindest eines Teils der Eingabe berechnet wird, die dem Surrogatmodell (SMD) für die nächste iterative Schleife bereitzustellen ist,
c) Wiederholen der Schleifenschritte a)-b), bis ein Kriterium gegenseitiger Konvergenz (CCT) der Subsystemschrittausgaben (MSO) des Eingabebereitstellungssubsystems (SMN) und des Surrogatmodells (SMD) erfüllt ist,

d) zumindest teilweises Bereitstellen der konvergierten Subsystemschrittausgaben (MSO) an das Hauptmodell (MMD) als zumindest einen Teil der Subsystemschritteingabe (MSI),

e) Berechnen, durch das Hauptmodell (MMD), der Subsystemschrittausgabe (MSO) anhand der Subsystemschritteingabe (MSI) für den definierten Subsystemzeitschritt (SMP).

17. Verfahren nach Anspruch 16, umfassend die folgenden zusätzlichen Schritte:

I. Definieren von Matrizen A, B, C und D, die die Zustandsraumdarstellung der Linearisierung des Modells (MMD) angeben,

II. Berechnen der Resolventenmatrix der Zustandsraumdarstellung des Systems, definiert durch $C((sI-A)^{-1})B+D$, wobei -1 die Matrixinversion angibt,

III. Berechnen der Laplace-Transformierten der Monombasis als erste Einspaltenmatrix, gefüllt mit den Laplace-Transformierten jeweils von 1, t, t^2, ..., wobei t die Zeit angibt und wobei der Exponent den maximalen Polynomgrad der Polynom-Subsystemschritteingaben (MSI) erreicht,

IV. Berechnen des Kronecker-Produkts der Resolventenmatrix und der ersten Einspaltenmatrix,

V. Zusammenführen der Polynomkoeffizienten jeder Subsystemschritteingabe (MSI) in einer zweiten Einspaltenmatrix,

VI. Berechnen des Matrizenprodukts ($\mathcal{L}^{-1}(\Gamma)(\delta t^{[N]}) \times \breve{\Xi}$) der inversen Laplace-Transformierten des Kronecker-Produkts und der zweiten Einspaltenmatrix,

VII. Berechnen einer Matrix P als $C \times (sI-A)^{-1}$, wobei I die Einheitsmatrix der gleichen Größe wie A angibt und wobei s die Variable der Laplace-Domäne angibt,

VIII. Berechnen des Matrix-Vektor-Produkts der Matrix P und des Vektors, der die Zustandsvariablen des Subsystems enthält, zu Beginn des Cosimulationsschrittes (SMP), entsprechend dem Ende des vorherigen Cosimulationsschrittes,

IX. Berechnen der inversen Laplace-Transformierten ($\mathcal{L}^{-1}(Px^{[N]})(\delta t^{[N]})$) des Matrix-Vektor-Produkts über die Länge des Simulationsschrittes (SMP) (entsprechend der Verzögerungszeit (DLT)),

X. Berechnen des linearen Teils als die Summe des Matrizenprodukts ($\mathcal{L}^{-1}(\Gamma)(\delta t^{[N]}) \times \breve{\Xi}$) und der inversen Laplace-Transformierten ($\mathcal{L}^{-1}(Px^{[N]})(\delta t^{[N]})$),

XI. Berechnen des Kontrollteils gemäß Schritt (e) nach Anspruch 1, 2 oder 3, wobei das Hauptmodell (MMD) das Empfangssubsystem (SMR) ist,

XII. Berechnen der Subsystemschrittausgabe (MSO) des Surrogatmodells (SMD) als die Summe des linearen Teils und des Kontrollteils.

18. Verfahren nach Anspruch 16,
wobei das Surrogatmodell (SMD) zumindest eine teilweise lineare Approximation des Hauptmodells (MMD) ist.

19. Verfahren nach Anspruch 16, 17 oder 18,

wobei die konvergierte Subsystemschrittausgabe (MSO) nur einen Teil der Subsystemschritteingabe (MSI) des Hauptmodells (MMD) abdeckt,

wobei das Verfahren den folgenden zusätzlichen Schritt umfasst:

- Berechnen des restlichen Teils der Subsystemschritteingabe (MSI) des Hauptmodells (MMD) gemäß Schritt (e) nach Anspruch 1, 2 oder 3, wobei das Hauptmodell (MMD) das Empfangssubsystem (SMR) ist.

20. Verfahren nach Anspruch 17 oder 18, wobei alle Subsysteme (SMN) mannigfaltig sind und wobei das iterative Lösen gleichzeitig an jedem Surrogatsubsystem (SMD) in einer einzigen Iteration unter Verwendung eines linearen Systems erfolgen kann, das durch Folgendes erstellt wird:

- die lineare Beziehung, die die Surrogatsubsysteme darstellen, zwischen allen Subsystemschritteingaben (SMI) und allen Subsystemschrittausgaben (SMO),

- die lineare Beziehung, die die Polynom-Datenvorhersagemodelle (DEM) darstellen, zwischen den vorhergesagten Daten (EDT) und den bekannten Werten ($DAT_{rel}$) für den anstehenden Subsystemzeitschritt (SMP) - für jedes Subsystem (SMN) auf den gleichen eingestellt, da das Lösen einmalig für die gesamte Zusammenführung der Subsysteme erfolgt, sodass es ein Surrogat für das gesamte System (SYS) erstellt - nach mindestens einem der Ansprüche 3-7,
- den in Anspruch 16 beschriebenen restlichen Teil als konstanten Term (unabhängig von den nächsten Subsystemschritteingaben (MSI), die am Ende des Subsystemzeitschrittes (SMP) erwartet werden)), und
- die Verbindungsinformationen zwischen den Subsystemschrittausgaben (MSO) aller Subsysteme (SMS) und den Subsystemschritteingaben (MSI) dieser Subsysteme (SMR), was als erweiterter Begriff einer Permutation betrachtet werden kann, die gestattet, dass eine Subsystemschrittausgabe (MSO) mit keiner, einer oder mehreren Subsystemschritteingaben (MSI) verbunden wird, und wobei eine solche Beziehung linear ist.

21. Computersystem (CPS), umfassend mindestens einen Prozessor zum Ermöglichen einer numerischen modularen Simulation eines Systems (SYS) selbst dann, wenn unterschiedliche Plattformen oder unterschiedliche interne Solver für jede Subeinheit (SSY) verwendet werden, **dadurch gekennzeichnet, dass** es angeordnet und ausgelegt ist zum Ausführen der Schritte des computerimplementierten Verfahrens nach einem der vorhergehenden Ansprüche.

22. Computerlesbares Medium zum Ermöglichen einer numerischen modularen Simulation eines Systems (SYS) selbst dann, wenn unterschiedliche Plattformen oder unterschiedliche interne Solver für jede Subeinheit (SSY) verwendet werden, codiert mit ausführbaren Anweisungen, die **dadurch gekennzeichnet sind, dass** sie bei Ausführung bewirken, dass das Computersystem (CPS) nach Anspruch 21 ein Verfahren nach einem der Ansprüche 1 bis 20 ausführt.

**Revendications**

1. Procédé mis en oeuvre par ordinateur de simulation numérique modulaire d'un système (SYS), ledit système étant désagrégé (a) en au moins deux sous-systèmes (SMN) de simulation de sous-unités (SSY), le procédé comprenant :
(b) simuler les sous-unités (SSY) respectives de manière répétée pas à pas, en produisant une sortie (MSO) de stade de sous-système, à partir de l'entrée (MSI) de stade de sous-système, pendant un stade (SMP) de temps de sous-système respectif,
**caractérisé par** les stades supplémentaires de validation d'une simulation numérique modulaire du système (SYS), même si des plateformes différentes ou des dispositifs internes de résolution différents sont utilisés par chaque sous-unité (SSY) :

(c) transmettre des entrées (MSI) de stade de sous-système à un sous-système (SMR) de réception et simuler ce sous-système (SMN) pendant un temps (DLT) de retard, avant que ses sorties (MSO) de stade de sous-système soient produites,
(d) recevoir des variables (TRD) de connexion d'interface d'un sous-système (SMS) d'émission comprenant au moins l'un de :

- une donnée (DTA) numérique,
- au moins des paramètres d'un modèle (DEM) de prédiction de la donnée (DTA) numérique,
- une modèle (DEM) de prédiction de donnée affecté à la donnée (DTA) numérique,

dans lequel la donnée (DTA) numérique appartient à la sortie (MSO) de stade de sous-système du sous-système (SMS) d'émission, comprenant des détails sur au moins une information du sous-système (SMS) d'émission à envoyer à au moins un sous-système (SMR) de réception,
(e) prédire la donnée (DTA) numérique par un modèle (DEM) de prédiction de donnée pendant le temps (DLT) de retard pour obtenir une donnée (EDT) numérique prédite des variables (TRD) d'interface fournies par le sous-système (SMS) d'émission,
(f) faire débuter le stade de simulation suivant du sous-système (SMR) de réception produisant la sortie (MSO) de stade de sous-système suivante à partir de l'entrée (MSI) de stade de sous-système, dans lequel l'entrée (MSI) de stade de sous-système comprend la donnée (EDT) numérique prédite.

2. Procédé suivant la revendication 1, comprenant les stades supplémentaires de :

- détermination du modèle (DEM) de prédiction de donnée en sélectionnant un type (DET) de modèle de prédiction de donnée dans un groupe de fonctions déterminées à l'avance et
- étalonnage du modèle (DEM) de prédiction de donnée à la donnée (DTA) numérique, respective du sous-système (SMS) d'émission, de la sortie (MSO) de stade de sous-système des stades précédents 1, 2, 3 ou plus, en excluant la sortie ($MSO_{1st}$) de stade de sous-système produite en dernier.

**3.** Procédé suivant la revendication 2,
dans lequel le modèle (DEM) de prédiction de donnée est une fonction polynomiale.

**4.** Procédé suivant la revendication 1 ou 2, comprenant les stades :

sélectionner le modèle (DEM) de prédiction de donnée, après un stade (SMP) de cosimulation d'un sous-système (SMS) d'émission,
étalonner le modèle (DEM) de prédiction de donnée, suivant un type (DET) de modèle de production de donnée sélectionné à l'avance, avant prédiction du sous-système (SMR) de réception, en utilisant le modèle (DEM) de prédiction de donnée sélectionné au stade correspondant du sous-système (SMS) d'émission correspondant.

**5.** Procédé suivant la revendication 3, comprenant les stades :

sélection du degré polynomial du modèle (DEM) de prédiction de données, après un stade (SMP) de cosimulation de sous-système (SMS) d'émission,
étalonnage du modèle (DEM) de prédiction de donnée suivant un type (DET) de modèle de prédiction de donnée sélectionné à l'avance, avant prédiction du sous-système (SMR) de réception, en utilisant le degré polynomial sélectionné sur le stade correspondant du sous-système (SMS) d'émission correspondant.

**6.** Procédé suivant la revendication 3, 4 ou 5,
comprenant le stade supplémentaire de :

- sélectionner un ordre polynomial du type (DET) de modèle de prédiction de donnée,
- déterminer l'erreur (ERD) en comparant la donnée ($DTA_{prd}$) numérique calculée par le modèle (DEM) de prédiction de donnée, sur la base d'au moins les sorties (MSO) de stade de sous-système du stade avant la dernière sortie ($MSO_{1st}$) de stade de sous-système à la dernière donnée ($DTA_{rel}$) numérique de sortie ($MSO_{1st}$) de stade de sous-système pour le même point dans le temps (PIT) pour le sous-système (SMS) d'émission,
- répéter au moins une fois les stades de :

- sélection d'un ordre polynomial, dans lequel on sélectionne un ordre polynomial différent de celui pendant les répétitions précédentes, et
- détermination de l'erreur (ERD) associée,

- choisir l'ordre polynomial du modèle (DEM) de prédiction de donnée, comme étant l'un ayant l'erreur (ERD) la plus petite, parmi les modèles (DEM) de prédiction de donnée, qui sont respectivement sélectionnés et déterminés en erreur (ERD) pendant le ou les stades de répétition précédents,
- dans le cas où tous les ordres polynomiaux du type de modèle de prédiction de donnée produisent une erreur plus grande que un seuil (TRS) donné, utiliser un modèle (DEM) de prédiction de donnée constant [ordre 0].

**7.** Procédé suivant la revendication 6,
comprenant le stade supplémentaire de :

- extension du degré polynomial d'un modèle (DEM) de prédiction de donnée obtenu par une interpolation d'Hermite.

**8.** Procédé suivant au moins l'une des revendications 1 à 7 précédentes, comprenant les stades supplémentaires de :

- détermination de l'erreur (ERD) en comparant la donnée ($DTA_{prd}$) numérique calculée par le modèle (DEM) de prédiction de donnée sur la base d'au moins le stade avant la dernière sortie ($MSO_{1st}$) de stade de sous-système à la dernière donnée ($DTA_{rel}$) numérique de sortie ($MSO_{1st}$) de stade de sous-système pour le même point dans le temps (PIT) pour le sous-système (SMS) d'émission,
- régler le stade (SMP) de temps de sous-système du sous-système (SMS) d'émission suivant une relation déterminée à l'avance entre l'erreur (ERD) et le stade ($SMP_{prv}$) de temps de sous-système précédent.

**9.** Procédé suivant la revendication 8,
dans lequel la relation déterminée à l'avance entre l'erreur (ERD) et le stade ($SMP_{prv}$) de temps de sous-système précédent est une fonction décroissante.

10. Procédé suivant la revendication 9,
dans lequel la relation déterminée à l'avance reliant le stade ($SMP_{adj}$) de temps de sous-système réglé à l'erreur (ERD) et au stade ($SMP_{prv}$) de temps de sous-système précédent est définie par :

$$(SMP_{adj}) = (SMP_{prv}) * BETA * (RTTO/ERD) \char`\^ (n+1)$$

dans laquelle

n : degré polynomial du modèle (DEM) de prédiction de donnée
RTTO : tolérance relative
ERD : erreur, de préférence, erreur relative
BETA : coefficient de sécurité dans [0,5 à 1,0[, de préférence 0,9

11. Procédé suivant au moins l'une des revendications 8 à 10 précédentes, comprenant le stade supplémentaire de :

- pour au moins un sous-système (SMS) restriction d'un stade (SMP) de temps de sous-système arrivant, de manière à ce qu'il corresponde au premier temps de fin de stade arrivant de n'importe quel sous-système (SMS), qui a des sorties reliées par des entrées au sous-système (SMS) à restreindre au stade de temps.

12. Procédé suivant au moins la revendication 11 précédente, comprenant les stades supplémentaires de :

- sélection d'un sous-système (SMS) pour lequel des sorties (MSO) de stade de tout sous-système sont connectés à des entrées (MSI) de stade de sous-système de sous-systèmes (SMR), qui ne supportent pas un stade (SMP) de temps de sous-système variable,
- extension de la dimension de stade (SMP) de temps de sous-système arrivant des sous-systèmes (SMS) sélectionnés, jusqu'à ce que la fin du stade immédiatement suivant des sous-systèmes (SMR), qui ont des entrées (MSI) de stade de sous-système reliés aux sorties (MSO) dudit stade de sous-système.

13. Procédé suivant au moins l'une des revendications précédentes,
dans lequel le temps (DLT) de retard convient pour retarder la transmission de la donnée (DTA) numérique, jusqu'à un point déterminé à l'avance dans le temps (PIT), lorsque le sous-système (SMR) d'émission fournit un modèle (DEM) de prédiction de donnée fiable en ce qui concerne une tolérance (RTTO) relative donnée.

14. Procédé suivant au moins une revendication précédente, comprenant les stades supplémentaires :

- sélection d'un seul type (DET) de modèle de prédiction de donnée dans le groupe de types (DET) de modèles de prédiction de données déterminé à l'avance et
- étalonnage respectivement d'au moins deux modèles (DEM) de prédiction du type sélectionné à la donnée (DTA) numérique, du sous-système (SMS) d'émission respective de sortie (MSO) de stade de sous-système des stades précédents 1, 2, 3 ou plus, en excluant la dernière ($MSO_{1st}$) ,
- détermination de l'erreur (ERD) pour chaque modèle (DEM) de prédiction de donnée en comparant la donnée ($DTA_{prd}$) numérique calculée par le modèle (DEM) de prédiction de donnée sur la base d'au moins le stade avant la dernière sortie ($MSO_{1st}$) de stade de sous-système à la dernière donnée ($DTA_{rel}$) numérique de sortie ($MSO_{1st}$) de stade de sous-système pour le même point dans le temps (PIT) pour le sous-système (SMS) d'émission,
- Sélection parmi les modèles (DEM) de prédiction de donnée

- du type (DET) de modèle de prédiction de donnée sélectionné - du modèle (DEM) de prédiction de donnée ayant l'erreur (ERD) la plus petite.

15. Procédé suivant au moins l'une des revendications 1 à 14 précédentes,
dans lequel la simulation du système (SYS) est itérative, de manière à ce qu'au moins l'un des sous-systèmes (SMN) de simulation interagisse avec au moins un autre sous-système (SMN) de simulation itérativement, ces sous-systèmes étant des sous-systèmes (ISM) itératifs.

**16.** Procédé suivant la revendication 15,

dans lequel au moins l'un des sous-systèmes (ISM) itératifs est prévu sous la forme d'un modèle plusieurs fois, au moins un modèle (TMD) deux fois, comprenant un modèle (MMD) principal et au moins un modèle (SMD) subrogé, dans lequel le modèle (SMD) subrogé est apte à répéter, au moins un seul stade de cosimulation en étant, de préférence, apte à répéter de multiples stades de cosimulation,

dans lequel le modèle (SMD) subrogé comprend au moins des paramètres de sortie (MSO) de stade de sous-système identiques au moins en partie et des paramètres d'entrée (MSI) de stade de sous-système comme modèle (MMD) principal, le procédé comprenant les stades supplémentaires affectés à un stade (SMP) de temps de sous-système défini :

a) le modèle (SMD) subrogé recevant une entrée (MSI) de stade de sous-système provenant au moins en partie d'au moins un autre sous-système (SMN) fournissant une entrée,

b) le modèle (SMD) subrogé calculant une sortie (MSO) de stade de sous-système, à partir de l'entrée (MSI) de stade de sous-système, les entrées (MSI) de stade de sous-système provenant au moins en partie d'au moins l'un d'au moins un autre sous-système (SMN) fournissant une entrée calculant une sortie (MSO) de stade de sous-système incluant au moins une partie de l'entrée à fournir pour la boucle itérative suivante au modèle (SMD) subrogé,

c) répétition des stades a) - b) de boucle, jusqu'à ce qu'un critère (CCT) mutuel de conversion des sorties (MSO) de stade de sous-système des sous-systèmes (SMN) fournissant une entrée et du modèle (SMD) subrogé soit satisfait,

d) fournir au moins des sorties (MSO) de stade de sous-système convergeant au moins partiellement au modèle (MMD) principal, comme au moins une partie de l'entrée (MSI) de stade de sous-système,

e) le modèle (MMD) principal calculant la sortie (MSO) de stade de sous-système, à partir de l'entrée (MSI) de stade de sous-système pour le stade (SMP) de temps de sous-système défini.

**17.** Procédé suivant la revendication 16, comprenant les stades supplémentaires :

I. on définit des matrices A, B, C et D dénotant la représentation état-espace de la linéarisation du modèle (MMD) ,

II. on calcule la matrice résolvante de la représentation état-espace du système défini par $C((sI-A)^{-1})B+D$, dans lequel $^{-1}$ dénote l'inversion de la matrice,

III. on calcule la transformé de Laplace des monomes sur la base d'une première matrice à colonne unique remplie des transformés de Laplace de respectivement $1, t, t^2, ..., t$ dénotant le temps et dans lequel l'exposant atteint de degré le degré polynomial maximum des entrées (MSI) de stade de sous-système polynomial,

IV. on calcule le produit de Kronecker de la matrice résolvante par la première matrice à colonne unique,

V. on réunit les coefficients polynomiaux de chaque entrée (MSI) de stade de sous-système dans une deuxième matrice à colonne unique,

VI. on calcule le produit

$$\left( \mathcal{L}^{-1}(\Gamma)\left(\delta t^{[N]}\right) \times \tilde{\Xi} \right)$$

de la transformée inverse de Laplace du produit de Kronecker par la première matrice à colonne unique,

VII. on calcule une matrice P sous la forme de $C \times (sI-A)^{-1}$, dans lequel I dénote la matrice d'identité de la même dimension que A, et dans lequel s dénote la variable du domaine de Laplace,

VIII. on calcule le produit matrice-vecteur de la matrice P par le vecteur contenant les variables d'état du sous-système au début du stade (SMP) de cosimulation correspondant à la fin du stade de cosimulation précédent,

IX. on calcule la transformée $\left( \mathcal{L}^{-1}\left(Px^{[N]}\right)\left(\delta t^{[N]}\right) \right)$ inverse de Laplace du produit matrice-vecteur sur la longueur du stade de (SMP) de cosimulation (correspondant au temps (DLT) de retard),

X. on calcule la partie linéaire sous la forme de la somme du produit

$$\left( \mathcal{L}^{-1}(\Gamma)\left(\delta t^{[N]}\right) \times \tilde{\Xi} \right)$$

matriciel par la transformée $\left(\mathcal{L}^{-1}\left(Px^{[N]}\right)\left(\delta t^{[N]}\right)\right)$ inverse de Laplace,

XI. on calcule la partie de commande suivant le stade (e), suivant la revendication 1, 2 ou 3, dans lequel le modèle (MMD) principal est le sous-système (SMR) de réception,

XII. on calcule la sortie (MSO) sous-système-stade du modèle (SMD) subrogé comme la somme de la partie linéaire et de la partie de commande.

**18.** Procédé suivant la revendication 16,
dans lequel le modèle (SMD) subrogé est au moins une approximation linéaire partielle du modèle (MMD) principal.

**19.** Procédé suivant la revendication 16, 17 ou 18,

dans lequel la sortie (MSO) de stade de sous-système convergente recouvre seulement une partie de l'entrée (MSI) de stade de sous-système du modèle (MMD) principal,
le procédé comprenant le stade supplémentaire, dans lequel :

- on calcule la partie restante de l'entrée (MSI) de stade de sous-système du modèle (MMD) principal suivant le stade (e), suivant la revendication 1, 2 ou 3, le modèle (MMD) principal étant le sous-système (SMR) de réception.

**20.** Procédé suivant la revendication 17 ou 18, dans lequel tous les sous-systèmes (SMN) sont à plusieurs fois et la résolution par itération peut être faite en une fois sur chaque sous-système (SMD) subrogé en une seule itération, en utilisant un système linéaire constitué par :

- la relation linéaire que les sous-systèmes subrogés représentent entre toutes les entrées (SMI) de stade de sous-système et toutes les sorties (SMO) de stade de sous-système,
- la relation linéaire que les modèles (DEM) de prédiction de donnée polynomiaux représentent entre la donnée (EDT) prédite et les valeurs (DAT$_{rel}$) connues pour le stade (SMP) de temps de sous-système arrivant - fixé comme étant le même pour chaque sous-système (SMN) puisque la résolution est faite une fois pour toutes pour le rassemblement complet de sous-systèmes, de sorte qu'elle crée un subrogé pour tous le système (SYS) suivant au moins l'une des revendications 3 à 7,
- la partie restante décrite à la revendication 16 comme terme constant (indépendamment des entrées (MSI) de stade de sous-système suivant escomptées à la fin du stade (SMP) de temps de sous-système), et
- l'information de connexions entre les sorties (MSO) de stade de sous-système de tous les sous-systèmes (SMS) et les entrées (MSI) de stade de sous-système de ces sous-systèmes (SMR), qui peut être considérée comme une notion étendue de permutation, qui permet à une sortie (MSO) de stade de sous-système d'être connectée à aucune, à une ou à plusieurs entrées (MSI) de stade de sous-système, et dans lequel une relation de ce genre est linéaire.

**21.** Système (CPS) d'ordinateur comprenant au moins un processeur pour permettre une simulation numérique modulaire d'un système (SYS), même si des plateformes différentes ou des dispositifs internes de résolution différents sont utilisés par chaque sous-unité (SSY), **caractérisé en ce qu'**il est agencé et configuré pour effectuer les stades du procédé mis en oeuvre par ordinateur suivant l'une quelconque des revendications précédentes.

**22.** Support, déchiffrable par ordinateur pour permettre une simulation numérique modulaire d'un système (SYS), même si des plateformes différentes ou des dispositifs internes de résolution différents sont utilisés par chaque sous-unité (SSY), codé par des instructions exécutables, **caractérisé en ce que**, lorsqu'elles sont exécutées, elles font que le système (CPS) d'ordinateur suivant la revendication 21 effectue un procédé suivant l'une quelconque des revendications 1 à 20.

# FIG 1

FIG 1A

FIG 1B

# FIG 1A

CPS

(a) SYS ...

SSY [SMN] | SSY [SMN]

SSY [SMN]

(b) SMS → MSO

1. MSI → SMN → MSO
   ⋮
n. MSI → SMN → MSO

MSI → SMR

SMP

(c1) {DET₁, DET₂, DET₃ ...}

DET → DEM

(c) SMN

SMS → MSO — TRD — MSI → SMR

DTA / DEM

(c2) SMS — DLT  DLT  DLT

MSO MSO MSO MSO_lst

... DET  DTA

DEM

(d) MSI → SMN → MSO

TRD [...DLT...] TRD

# FIG 1B

**(e) SMS**

$DTA \xrightarrow{DEM} EDT$

$SMR$

**(e1)** $\{DET_1, \boxed{DET_2}, DET_3 ...\}$

$DET_{sel}$

**(e2)** $\boxed{SMS}$ DLT DLT DLT

MSO MSO MSO $MSO_{lst}$

$DET_{sel} \rightarrow DEM_1$

$DET_{sel} \rightarrow DEM_2$

$\cdots$

$DET_{sel} \rightarrow DEM_n$

**(e3)** $MSO_{lst} \rightarrow DTA_{rel}$

$DEM_1 \rightarrow DTA_1 (EDT_1) \rightarrow ERD_1$

$DEM_2 \rightarrow DTA_2 (EDT_2) \rightarrow ERD_2$

$\vdots$

$DEM_n \rightarrow DTA_n (EDT_n) \rightarrow ERD_n$

PIT

**(e4)** $DEM_1 \text{---}\cdots\text{---}\rightarrow ERD_1$

$DEM_2 \text{---}\cdots\text{---}\rightarrow ERD_2$

$\vdots \quad \cdots \quad \vdots$

$DEM_n \text{---}\cdots\text{---}\rightarrow ERD_n$

$ERD_k = \overline{ERD_{sml}}$

$DEM_k \Rightarrow DEM_{sel}$

**(f) EDT**

$MSI \rightarrow \boxed{SMN} \rightarrow MSO$

SMP

**(f1)** PIT

$DEM \rightarrow DTA_{prd} (EDT)$

$MSO_{lst} \rightarrow DTA_{rel} (DTA)$

$\rightarrow ERD$

**(f2)** $SMPadj = SMPprv \cdot \left(\dfrac{RTTO}{ERD}\right)^{n+1}$

FIG 2

# FIG 3

EP 4 229 489 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **ÇAKMAK, HÜSEYIN et al.** A new distributed co-simulation architecture for multi-physics based energy systems integration. *AUTOMATISIERUNGSTECH-NIK - AT,* 26 November 2019, vol. 67 (11), ISSN 0178-2312, DOI:10.1515/auto-2019-0081, 972-983

- *MATHEMATICS OF COMPUTATION,* vol. 71 (239), 1043-1074
- **MISRA P ; PATEL R. V.** *Computation of Transfer Function Matrices of Linear Multivariable Systems,* 1987, vol. 23 (5), 635-640